(19) Europäisches Patentamt
European Patent Office
Office européen des brevets

(11) **EP 4 753 343 A1**

(12) **EUROPEAN PATENT APPLICATION**
published in accordance with Art. 153(4) EPC

(43) Date of publication:
**03.06.2026 Bulletin 2026/23**

(21) Application number: **23951706.3**

(22) Date of filing: **11.09.2023**

(51) International Patent Classification (IPC):
**H04W 56/00** (2009.01)

(52) Cooperative Patent Classification (CPC):
**H04W 56/00**

(86) International application number:
**PCT/CN2023/117986**

(87) International publication number:
**WO 2025/054758 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **CUI, Shengjiang**
**Dongguan, Guangdong 523860 (CN)**

(74) Representative: **Novagraaf Technologies**
**2 rue Sarah Bernhardt**
**CS90017**
**92665 Asnières-sur-Seine Cedex (FR)**

(54) **COMMUNICATION METHOD, APPARATUS AND DEVICE, AND STORAGE MEDIUM**

(57) The present application belongs to the field of communications. Disclosed are a communication method, apparatus and device, and a medium. The method, which is performed by a first node, comprises: sending a first signal, wherein a time-domain resource of the first signal comprises a first number of first time-domain units and a second number of second time-domain units, the first number of first time-domain units being used for the synchronization of a second node, a second signal being associated with a third signal, the second signal being a signal of the first signal in a first time-domain unit, and the third signal being a signal of the first signal in a second time-domain unit. A first signal with a time-domain resource comprising first time-domain units supports a second node to operate as much as possible within an accurate time-domain range and/or frequency-domain range, thereby ensuring the transmission quality of the second node.

Transmitting a first signal, wherein a time-domain resource of the first signal includes a first quantity of first time-domain units and a second quantity of second time-domain units, wherein the first time-domain units are used for synchronization at a second node

910

**FIG. 9**

**Description**

**TECHNICAL FIELD**

The present disclosure relates to the field of communications, and in particular, to a communication method, apparatus, and device, and a storage medium.

**RELATED ART**

Radio frequency (RF) and baseband circuits of some communication devices are simple. Oscillators that are simpler to implement and consume less power are used to reduce complexity and save power consumption. However, such oscillators have poor frequency precision, resulting in a large frequency offset. This affects subsequent communication operations of the communication devices, and further interferes with normal communication of other devices.
How to avoid a time-frequency offset as much as possible to ensure that the communication devices work within relatively accurate time-frequency resources is a problem that needs to be solved.

**SUMMARY**

The present disclosure provides a communication method, apparatus, and device, and a storage medium. The technical solutions are as follows.
According to an aspect of some embodiments of the present disclosure, a communication method is provided. The method is performed by a first node, and includes:

transmitting a first signal, wherein a time-domain resource of the first signal includes a first quantity of first time-domain units and a second quantity of second time-domain units, wherein the first time-domain units are used for synchronization at a second node,
wherein a second signal is associated with a third signal, wherein the second signal is a signal of the first signal which locates in one of the first time-domain units, and the third signal is a signal of the first signal which locates in one of the second time-domain units.

According to an aspect of some embodiments of the present disclosure, a communication method is provided. The method is performed by a second node, and includes:

receiving a first signal, wherein a time-domain resource of the first signal includes a first quantity of first time-domain units and a second quantity of second time-domain units, wherein the first time-domain units are used for synchronization at the second node,
wherein a second signal is associated with a third signal, wherein the second signal is a signal of the first signal which locates in one of the first time-domain units, and the third signal is a signal of the first signal which locates in one of the second time-domain units.

According to an aspect of some embodiments of the present disclosure, a communication apparatus is provided. The apparatus includes:

a transmitting module, configured to transmit a first signal, wherein a time-domain resource of the first signal includes a first quantity of first time-domain units and a second quantity of second time-domain units, wherein the first time-domain units are used for synchronization at a second node,
wherein a second signal is associated with a third signal, wherein the second signal is a signal of the first signal which locates in one of the first time-domain units, and the third signal is a signal of the first signal which locates in one of the second time-domain units.

According to an aspect of some embodiments of the present disclosure, a communication apparatus is provided. The apparatus includes:

a receiving module, configured to receive a first signal, wherein a time-domain resource of the first signal includes a first quantity of first time-domain units and a second quantity of second time-domain units, wherein the first time-domain units are used for synchronization at the communication apparatus,
wherein a second signal is associated with a third signal, wherein the second signal is a signal of the first signal which locates in one of the first time-domain units, and the third signal is a signal of the first signal which locates in one of the second time-domain units.

According to an aspect of some embodiments of the present disclosure, a communication device is provided. The communication device includes:

a processor;
a receiver and/or a transmitter that are connected to the processor; and
a memory configured to store one or more instructions executable by the processor, wherein
the transmitter is configured to transmit a first signal, and the receiver is configured to receive the first signal;
wherein a time-domain resource of the first signal includes a first quantity of first time-domain units and a second quantity of second time-domain units, wherein the first time-domain units are used for synchronization at a second node;
wherein a second signal is associated with a third signal, wherein the second signal is a signal of the first signal which locates in one of the first time-domain units, and the third signal is a signal of the first signal which locates in one of the second time-domain units.

According to an aspect of some embodiments of the present disclosure, a communication device is provided. The communication device includes: a receiver and/or a transmitter, wherein

the receiver is configured to receive a first signal, and the transmitter is configured to transmit the first signal; wherein a time-domain resource of the first signal includes a first quantity of first time-domain units and a second quantity of second time-domain units, wherein the first time-domain units are used for synchronization at a second node; wherein a second signal is associated with a third signal, wherein the second signal is a signal of the first signal which locates in one of the first time-domain units, and the third signal is a signal of the first signal which locates in one of the second time-domain units.

According to an aspect of some embodiments of the present disclosure, a computer-readable storage medium is provided. The computer-readable storage medium stores one or more executable instructions. The one or more executable instructions, when loaded and executed by a processor, cause the processor to perform the communication method described above.

According to an aspect of some embodiments of the present disclosure, a computer program product is provided. The computer program product includes one or more computer instructions. The one or more computer instructions are stored in a computer-readable storage medium, and a processor of a computer device is configured to read the one or more computer instructions from the computer-readable storage medium and execute the one or more computer instructions to cause the computer device to perform the communication method described above.

According to an aspect of some embodiments of the present disclosure, a chip is provided. The chip includes programmable logic circuitry or one or more programs. The chip is configured to perform the communication method described above.

According to an aspect of some embodiments of the present disclosure, a computer program is provided. The computer program includes one or more computer instructions. The one or more computer instructions, when loaded and executed by a processor of a computer device, cause the computer device to perform the communication method described above.

The technical solutions according to the embodiments of the present disclosure have the following technical effects.

The first time-domain unit is used for the synchronization, and the first signal whose time-domain resource includes the first time-domain unit enables the second node to work within an accurate time-domain range and/or frequency-domain range as much as possible, such that the transmission quality of the second node is ensured, the interference between the second node and another device is avoided, and the overall transmission efficiency and communication quality of a communication system are improved.

## BRIEF DESCRIPTION OF DRAWINGS

To describe the technical solutions according to the embodiments of the present disclosure more clearly, the accompanying drawings required for describing the embodiments are briefly described hereinafter. Apparently, the accompanying drawings in the following description show merely some embodiments of the present disclosure, and those of ordinary skill in the art may still derive other accompanying drawings from these accompanying drawings without creative efforts.

FIG. 1 is a schematic diagram of a wireless communication system according to some exemplary embodiments of the present disclosure;

FIG. 2 is a schematic diagram of a terminal device according to some exemplary embodiments of the present disclosure;

FIG. 3 is a schematic diagram of a communication system according to some exemplary embodiments of the present disclosure;

FIG. 4 is a schematic diagram of RF energy harvesting according to some exemplary embodiments of the present disclosure;

FIG. 5 is a schematic diagram of a backscattering communication process according to some exemplary embodiments of the present disclosure;

FIG. 6 is a schematic diagram of resistive load modulation according to some exemplary embodiments of the present disclosure;

FIG. 7 is a schematic diagram of an encoding method according to some exemplary embodiments of the present disclosure;

FIG. 8 is a schematic diagram of a data packet according to some exemplary embodiments of the present disclosure;

FIG. 9 is a schematic flowchart of a communication method according to some exemplary embodiments of the present disclosure;

FIG. 10 is a schematic flowchart of a communication method according to some exemplary embodiments of the present disclosure;

FIG. 11 is a schematic diagram of a first time-domain unit and a second time-domain unit according to some exemplary embodiments of the present disclosure;

FIG. 12 is a schematic diagram of a time-domain unit of a first signal according to some exemplary embodiments of the present disclosure;

FIG. 13 is a schematic diagram of a time-domain unit of a first signal according to some exemplary embodiments of the present disclosure;

FIG. 14 is a schematic diagram of a time-domain unit of a first signal according to some exemplary embodiments of the present disclosure;

FIG. 15 is a schematic diagram of a time-domain unit of a first signal according to some exemplary embodiments of the present disclosure;

FIG. 16 is a schematic diagram of a time-domain unit of a first signal according to some exemplary embodiments of the present disclosure;

FIG. 17 is a schematic diagram of a time-domain unit of a first signal according to some exemplary embodiments of the present disclosure;

FIG. 18 is a schematic diagram of a time-domain unit of a first signal according to some exemplary embodiments of the present disclosure;

FIG. 19 is a schematic diagram of a time-domain unit of a first signal according to some exemplary embodiments of the present disclosure;

FIG. 20 is a schematic flowchart of a communication method according to some exemplary embodiments of the present disclosure;

FIG. 21 is a schematic flowchart of a communication method according to some exemplary embodiments of the present disclosure;

FIG. 22 is a schematic diagram of a time-domain unit of a first signal according to some exemplary embodiments of the present disclosure;

FIG. 23 is a schematic diagram of a time-domain unit of a first signal according to some exemplary embodiments of the present disclosure;

FIG. 24 is a schematic diagram of a time-domain unit of a first signal according to some exemplary embodiments of the present disclosure;

FIG. 25 is a schematic diagram of a time-domain unit of a first signal according to some exemplary embodiments of the present disclosure;

FIG. 26 is a schematic diagram of a time-domain unit of a first signal according to some exemplary embodiments of the present disclosure;

FIG. 27 is a schematic diagram of generating a first signal according to some exemplary embodiments of the present disclosure;

FIG. 28 is a schematic diagram of generating a first signal according to some exemplary embodiments of the present disclosure;

FIG. 29 is a schematic diagram of a time-domain unit of a first signal according to some exemplary embodiments of the present disclosure;

FIG. 30 is a schematic diagram of a time-domain unit of a first signal according to some exemplary embodiments of the present disclosure;

FIG. 31 is a schematic diagram of a time-domain unit of a first signal according to some exemplary embodiments of the present disclosure;

FIG. 32 is a schematic diagram of a time-domain unit of a first signal according to some exemplary embodiments of the present disclosure;

FIG. 33 is a schematic diagram of a time-domain unit of a first signal according to some exemplary embodiments of the present disclosure;

FIG. 34 is a schematic diagram of a signal according to some exemplary embodiments of the present disclosure;

FIG. 35 is a schematic diagram of a signal according to some exemplary embodiments of the present disclosure;

FIG. 36 is a schematic diagram of a measurement window according to some exemplary embodiments of the present disclosure;

FIG. 37 is a schematic flowchart of a communication method according to some exemplary embodiments of the present disclosure;

FIG. 38 is a structural block diagram of a communication apparatus according to some exemplary embodiments of the present disclosure;

FIG. 39 is a structural block diagram of a communication apparatus according to some exemplary embodiments of the present disclosure;

FIG. 40 is a schematic structural diagram of a communication device according to some exemplary embodiments of the present disclosure; and

FIG. 41 is a schematic structural diagram of a communication device according to some exemplary embodiments of the present disclosure.

## DETAILED DESCRIPTION

For clearer descriptions of the objectives, technical solutions, and advantages of the present disclosure, embodiments of the present disclosure are further described in detail hereinafter with reference to the accompanying drawings. The exemplary embodiments are described in detail herein, and examples are illustrated in the accompanying drawings. When the following description refers to the accompanying drawings, the same numbers in different accompanying drawings represent the same or similar elements unless otherwise indicated. The embodiments described in the following exemplary embodiments do not represent all embodiments consistent with the present disclosure. Rather, they are merely examples of apparatus and methods consistent with certain aspects of the present disclosure, as detailed in the appended claims.

The terms used in the present disclosure are for the purpose of describing particular embodiments only and are not intended to limit the present disclosure. As used in the present disclosure and the appended claims, the singular forms "a," "an," and "the" are intended to include the plural forms as well, unless the context clearly indicates otherwise. It should also be understood that the term "and/or" as used herein refers to and encompasses any or all possible combinations of one or more associated listed items.

It should be understood that although the terms "first," "second," "third," and the like may be used herein to describe various pieces of information, and such information should not be limited to these terms. These terms are only used to distinguish one type of information from another. For example, first information may also be referred to as second information, and similarly, second information is also referred to as first information, without departing from the scope of the present disclosure. The word "if," as used herein, may be interpreted as "in a case where," " in a case when," or "in response to determining that," depending on the context.

First of all, the communication techniques involved in the embodiments of the present disclosure are introduced.

**Synchronization** means that a receiver and a transmitter generally need to keep synchronization in time and/or frequency to ensure the transmission quality. Two synchronization modes are briefly introduced herein.

(1) First synchronization mode: Time and frequency synchronization is performed through a primary synchronization signal (PSS) and a secondary synchronization signal (SSS) in a synchronization signal and physical broadcast channel (PBCH) block (SSB).

The present disclosure exemplarily provides a typical implementation, where a terminal device performs correlation detection of the PSS in the time domain, and acquires clock information (e.g., a start position of an orthogonal frequency-division multiplexing (OFDM) symbol) based on a position of a sequence correlation peak. During the process of correlation detection of the PSS in the time domain, an approximate frequency offset is estimated through blind search (that is, coarse frequency offset estimation is performed). A specific implementation of the coarse frequency offset estimation may involve presetting several fixed frequency offset values (referred to as frequency bins, for example, 0, +/-7.5 kHz, and +/-15 kHz), compensating the frequency offset values to a local sequence (or a received signal), performing correlation detection on the local sequence and the received signal, and comparing magnitudes of correlation peaks in different frequency offset value assumptions. A larger value indicates that the actual frequency offset value is closer to the corresponding preset frequency offset value, such that the approximate frequency offset is estimated. After the correlation detection of the PSS is performed, a resource position of the SSS signal is determined, and fine frequency offset estimation and calibration are performed in the frequency domain. In this way, the frequency offset error is controlled within a small range and does not affect subsequent data transmission and reception.

(2) Second synchronization mode: Time and frequency synchronization is performed through a short training sequence (ST) and a long training sequence (LT).

The ST includes ten identical portions each corresponding to 16 sampling points, and is used for frame synchronization, automatic gain control (AGC), antenna selection, and coarse frequency offset estimation. The coarse frequency offset estimation uses the last five portions of the ST. For a coarse frequency offset estimation method, reference is made to Formula (1):

$$\hat{\alpha}_{ST} = \frac{1}{16} \angle \left( \sum_{m=0}^{63} S_m^* S_{m+16} \right) \qquad (1)$$

The LT includes two identical portions and is used for fine frequency offset estimation. First, calibration needs to be performed based on a coarse frequency offset estimation result from the previous process, and fine estimation and calibration are then performed on this basis.

For a fine frequency offset estimation method, reference is made to Formula (2):

$$\hat{\alpha}_{LT} = \frac{1}{64} \angle \left( \sum_{m=0}^{63} S_m^* S_{m+64} \right) \qquad (2)$$

The frequency offset is estimated based on a phase between sequences repeated in the time domain in both Formula (1) and Formula (2) described above. The mathematical model is s(m)=x(m)*exp(j*α*m). Since an integer ambiguity is present in the phase calculation process, only a fractional part within [0, 2pi] is determined, and then the actual frequency offset estimation accuracy/range is inversely proportional to a distance between the repeated sequences. In the case where the ST is used for the coarse frequency offset estimation, and the distance between two repeated sequences is Δ=16, the estimation range is [0, 2pi]/16. In the case where the LT is used for the fine frequency offset estimation, and the distance between two repeated sequences is Δ=64, the estimation range is narrowed to [0, 2pi]/64. Assuming that the error/accuracy of the phase angle calculation operation at the same receiver is relatively constant, the larger denominator Δ (from 16 to 64) indicates that the resolution of the frequency offset estimation is higher.

In the embodiments of the present disclosure, the frequency offset estimation accuracy may alternatively be replaced with the frequency offset estimation resolution.

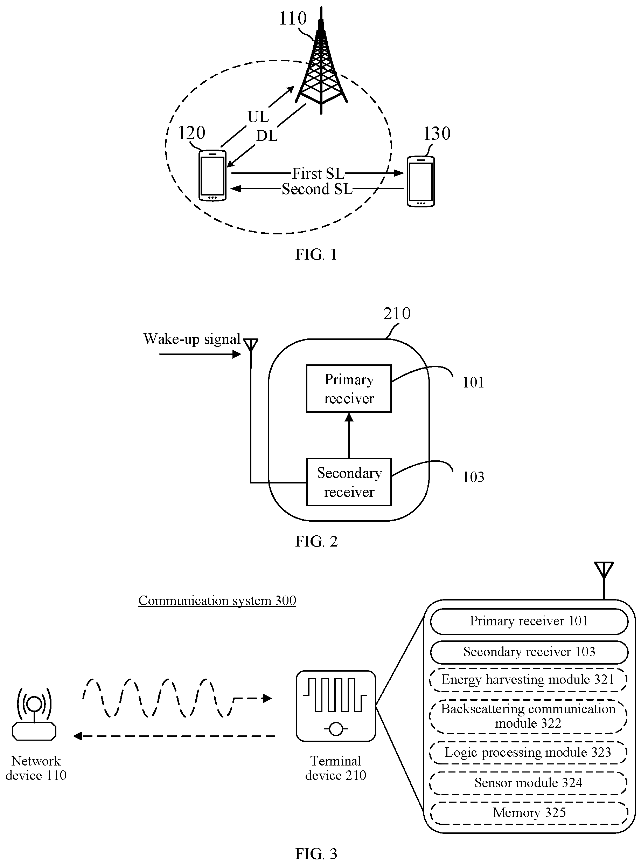

FIG. 1 is a schematic diagram of a wireless communication system according to some embodiments of the present disclosure. The wireless communication system includes a network device 110 and a terminal device 120, which is not limited in the present disclosure.

The network device 110 in the present disclosure has a wireless communication function, and includes, but is not limited to an evolved Node B (eNB), a radio network controller (RNC), a node B (NB), a base station controller (BSC), a base transceiver station (BTS), a home station (e.g., a home evolved Node B or Home Node B (HNB)), a baseband unit (BBU), an access point (AP), a wireless relay node, a wireless backhaul node, a transmission point (TP), or a transmission and reception point (TRP) in a wireless fidelity (Wi-Fi) system, one or a set (including a plurality of antenna panels) antenna panels of a station in a 5th Generation (5G) system, a network node consisting a gNB or a TP (for example, a baseband unit (BBU), a distributed unit (DU), and the like), a station in a beyond fifth generation (B5G) or a 6th Generation (6G) mobile communication system, a core network (CN), a fronthaul, a backhaul, a radio access network (RAN), a network slice, or a reader/writer in a radio frequency identification (RFID).

The terminal device 120 and/or the terminal device 130 in the present disclosure are also referred to as a user equipment (UE), an access terminal, a subscriber unit, a subscriber station, a rover station, a mobile station, a remote station, a remote terminal, a mobile device, a user terminal, a terminal, a wireless communication device, a user agent, or a user apparatus. The terminal includes, but is not limited to, handheld devices, wearable devices, in-vehicle devices, Internet of thing (IoT) devices, and the like, for example, an electronic tag, a controller, a mobile phone, a tablet, an e-reader, a laptop, a desktop computer, a television, a game console, a mobile Internet device (MID), an augmented reality (AR) terminal, a virtual reality (VR) terminal, a mixed reality (MR) terminal, a wearable device, a hand shank, a wireless terminal in the context of industry control, a wireless terminal in the context of self-driving, a wireless terminal in the context of remote medical, a wireless terminal in the context of smart gride, a wireless terminal in the context of transportation safety, a wireless terminal in the context of smart city, a wireless terminal in the context of smart home, a wireless terminal in the context of remove medical surgery, a cellular phone, a cordless phone, a Session Initiation Protocol (SIP) phone, a wireless local loop (WLL) station, a personal digital assistant (PDA), a TV set-top box (STB), a customer premise equipment (CPE), and the like.

The network device 110 is in communication with the terminal device 120 over an air interface technology, for example, over a Uu interface.

In some embodiments, communications between the network device 110 and the terminal device 120 include two communication scenarios, that is, an uplink communication scenario and a downlink communication scenario. Signals are transmitted to the network device 110 in the uplink communication scenario, and signals are transmitted to the terminal device 120 in the downlink communication scenario.

The network device 110 is in communication with the terminal device 130 over a direct connection communication technology, for example, over a PC5 interface.

In some embodiments, communications between the network device 110 and the terminal device 130 include two communication scenarios, that is, a first sidelink communication scenario and a second sidelink communication scenario. Signals are transmitted to the terminal device 130 in the first sidelink communication scenario, and signals are transmitted to the terminal device 130 in the second sidelink communication scenario.

The terminal device 120 and the terminal device 130 are both within the network coverage and located in the same cell, or the terminal device 120 and the terminal device 130 are both within the network coverage but located in different cells, or the terminal device 120 is within the network coverage but the terminal device 130 is outside the network coverage.

The technical solutions according to the embodiments of the present disclosure are applicable to various communication systems, for example, a global system of mobile communication (GSM), a code-division multiple access (CDMA) system, a wideband code-division multiple access (WCDMA) system, a general packet radio service (GPRS) system, a long-term evolution (LTE) system, an LTE frequency-division duplex (FDD) system, an LTE time-division duplex (TDD) system, an advanced long-term evolution (LTE-A) system, a universal mobile telecommunication system (UMTS), a worldwide interoperability for microwave access (WiMAX) communication system, a 5G mobile communication system, a new radio (NR) system, an evolution system of the NR system, an LTE-based access to unlicensed spectrum (LTE-U) system, an NR-based access to unlicensed spectrum (NR-U) system, a non-terrestrial network (NTN) system, a wireless local area network (WLAN), a Wi-Fi, a cellular IoT system, a cellular passive IoT system, evolution systems of the 5G NR system, and evolution systems of the B5G or 6G NR system. In some embodiments of the present disclosure, the "NR" is also referred to as a 5G NR system or a 5G system. The 5G mobile communication system includes a non-standalone (NSA) network and/or a standalone (SA) network.

The technical solutions according to the embodiments of the present disclosure are also applicable to machine-type communications (MTC), a long-term evolution-machine (LTE-M) technology, a device-to-device (D2D) network, a machine-to-machine (M2M) network, an IoT network, or other networks. The IoT network includes, for example, Internet of vehicles. Communication modes in the Internet of vehicles system are collectively referred to as vehicle-to-X (V2X, X represents anything). For example, the V2X includes (vehicle-to-vehicle (V2V) communications, vehicle-to-infrastructure (V2I) communications, vehicle-to-pedestrian (V2P), vehicle-to-network (V2N) communications, and the like.

The wireless communication system according to the embodiments of the present disclosure is applicable to at least one of scenarios including, but not limited to, an uplink communication scenario, a downlink communication scenario, or a sidelink communication scenario.

With the development of communication technologies and the expansion of communication demands, there are increasingly stringent requirements for the overall size, production cost, service life, ease of use, recycling and disposal, and power consumption of terminal devices. The terminal device illustrated in FIG. 2 satisfies the stringent requirements.

FIG. 2 is a schematic diagram of a terminal device 210 according to some exemplary embodiments of the present disclosure. The terminal device 210 may be practiced as the terminal device 120 and/or the terminal device 130 illustrated in FIG. 1.

The terminal device 210 includes a primary receiver 101 and an auxiliary receiver 103. The power consumption of the auxiliary receiver 103 is lower than the power consumption of the primary receiver 101. The auxiliary receiver 103 may replace the primary receiver 101 to receive some signals. That is, some operations previously necessarily performed by the primary receiver 101 are now performed by the auxiliary receiver 103. Moreover, the primary receiver 101 keeps in an off state without being instructed by the auxiliary receiver 103 to turn on, such that meaningless power waste of the primary receiver 101 when it is not necessary to receive signals or data is avoided. Since the power of the auxiliary receiver 103 is lower, the operations of the auxiliary receiver 103 for replacing the primary receiver 101 may significantly reduce the overall power consumption of the terminal device and achieve energy saving for the terminal device.

Furthermore, the terminal device 210 illustrated in FIG. 3 is used in combination with a wake up signal (WUS) mechanism. In a case where the auxiliary receiver 103 receives the WUS, the primary receiver 101 is dynamically waked up; or, in a case where the auxiliary receiver 103 does not receive the WUS, the primary receiver 101 is not waked up, and keep in an off state. It is not necessary for the auxiliary receiver 103 to be turned on or off to achieve power-saving like the primary receiver 101, but to be activated by the WUS at any time and to receive the wake-up information. Compared to the method where the primary receiver 101 receives the WUS, more power consumption is reduced by receiving the WUS by the auxiliary receiver 103. Therefore, the low-power feature of the auxiliary receiver 103 further enhances the energy-saving effect of the WUS mechanism, and further reduced the overall power consumption of the terminal device.

The primary receiver is also referred to as a first receiver, and the auxiliary receiver is also referred to as a second receiver or a wake-up receiver (WUR). The names of the two receivers are not limited in the present disclosure.

The terminal devices are classified into following three types based on energy sources and usage modes.

(1) Passive device

The passive device does not need a built-in battery. In a case where the passive device is close to a network device, the passive device is within a near field range formed by antenna radiation of the network device. Illustratively, the network device is a reader/writer of the RFID system. Therefore, an antenna of the passive device generates an induced current by electromagnetic induction, and the induced current drives a low-power chip circuit of the passive device. Demodulation of a forward link signal and modulation of a backward link signal are implemented. For a backscattering link, the passive device transmits the signal by backscattering or ultra-low-power active transmission. The passive device does not need the built-in battery to drive either for the forward link or a reverse link. The passive device does not need any battery, in which an RF circuit and a baseband circuit are very simple. For example, the passive device does not need devices such as a low-noise amplifier (LNA), a power amplifier (PA), a crystal oscillator, and an analog-to-digital converter (ADC), and has many advantages such as small size, light weight, very low price, and long service life.

(2) Semi-passive device

The semi-passive device is not provided with any conventional battery, and may harvest radio wave energy by an RF energy harvesting module and simultaneously store the harvested energy in an energy storage unit. In some embodiments, the energy storage unit is a capacitor. Upon acquiring the energy, the energy storage unit may drive a low-power chip circuit of the semi-passive device. Demodulation of a forward link signal and modulation of a backward link signal are implemented. For a backscattering link, the semi-passive device transmits the signal by backscattering or ultra-low-power active transmission.

The semi-passive device does not need any built-in battery to drive either for the forward link or a reverse link, and the energy stored by the capacitor in operation is from the radio energy harvested by the RF energy harvesting module. The semi-passive device inherits many advantages of the passive device, such as small size, light weight, very low price, and long service life.

(3) Active device

The active device is provided with a built-in battery. The battery is configured to drive a low-power chip circuit of the active device. Demodulation of a forward link signal and modulation of a backward link signal are implemented. However, for a backscattering link, the active device transmits the signal by backscattering or ultra-low-power active transmission. Therefore, signal transmission in the reverse link of the active device does not consume the power of the active device itself but uses backscattering. In the active device, the built-in battery supplies power to an RFID chip, and thus a reading/writing distance of a tag is increased and reliability of communication is improved. Therefore, the active device is applicable to some scenarios where relatively stringent requirements are put forward for a communication distance and a read latency.

The terminal devices 210 are classified into the following three types based on the transmitter.

(1) Device based on backscattering

Such a device transmits the uplink data by backscattering as described above. Such a device does not have an active transmitter for active transmission but only has a transmitter for backscattering. Therefore, when transmitting the uplink data, such a device needs a network device to provide carriers, and implements backscattering based on the carriers to implement uplink data transmission.

(2) Device based on an active transmitter

Such a device has an active transmitter with an active transmission capability for transmission of uplink data. When transmitting the uplink data, such a device transmits the uplink data using its own active transmitter, and does not need a network device to provide carriers. An active transmitter applicable to the device may be an ultra-low-power amplitude shift keying (ASK) transmitter, an ultra-low-power frequency shift keying (FSK) transmitter, or the like. Based on current implementations, the overall power consumption of such transmitters may be reduced to 400 microwatts to 600 microwatts in a case where a 100-microwatt signal is transmitted.

(3) Device based on both backscattering and an active transmitter

Such a device supports both backscattering and an active transmitter. The device determines whether to perform backscattering or perform active transmission using an active transmitter based on different situations (such as different power levels and different available environment energy sources) or based on the scheduling of a network device.

The terminal device 210 illustrated in FIG. 2 is also referred to as a low-power device, an ultra-low-power device, a zero-power device, a passive IoT device, or an ambient power enabled IoT (ambient IoT/A-IoT) device.

The communication technologies achieved by the terminal device 210 illustrated in FIG. 2 are also referred to as a low-power communication technology, an ultra-low-power communication technology, a zero-power communication technology, an ambient IoT/A-IoT communication technology, a passive IoT communication technology, or a zero-power IoT communication technology.

The A-IoT device using the A-IoT technology uses various environmental energies such as RF energy, optical energy, solar energy, thermal energy, and mechanical energy to drive the A-IoT device itself. The A-IoT device may have no energy storage capability or only have a limited energy storage capability (e.g., using a capacitor with a capacity of tens of microfarads). Compared with other IoT devices, the A-IoT devices have many advantages, for example, conventional battery-free, maintenance-free, small in size, low in complexity, low in cost, and have a long service life.

FIG. 3 illustrates a communication system 300 including a terminal device 210 and a network device 110.

The terminal device 210 includes a primary receiver 101 and an auxiliary receiver 103 illustrated in FIG. 2. In some embodiments, the terminal device 210 further includes an energy harvesting module 321. In some embodiments, the terminal device 210 further includes a backscattering communication module 322. In some embodiments, the terminal device 210 further includes a logic processing module 323. In some embodiments, the terminal device 210 further includes a sensor module 324. In some embodiments, the terminal device 210 further includes a memory 325. In some embodiments, in addition to the primary receiver 101 and the auxiliary receiver 103, the terminal device 210 further includes at least one of an energy harvesting module 321, a backscattering communication module 322, a logic processing module 323, a sensor module 324, or a memory 325.

Illustratively, the energy harvesting module 321 harvests energy carried by radio waves in space, and supplies power for driving various modules of the terminal device 210. Upon acquiring the energy, the terminal device 210 receives signals from the network device 110 through the auxiliary receiver 103 and the primary receiver 101, and transmits data to the network device 110 through the backscattering communication module 322. The data transmitted by the terminal device 210 may be from data stored in the terminal device 210 (e.g., identity or pre-written information, such as production date, brand, and manufacturer). The sensor module 324 includes various sensors. The terminal device 210 reports, based on a low-power mechanism, data collected by the various sensors. The memory 325 is used to store some basic information (such as item identifiers) or acquire sensing data, such as ambient temperature and ambient humidity.

The terminal device 210 implements simple signal demodulation, decoding or encoding, modulation, and other simple operations using the logic processing module 323. Therefore, the terminal device 210 only requires a simple hardware design, thereby lowering the cost and reducing the size of the terminal device 210.

It should be understood that the modules in the terminal device 210 illustrated in FIG. 3 are only illustrative and are not limited.

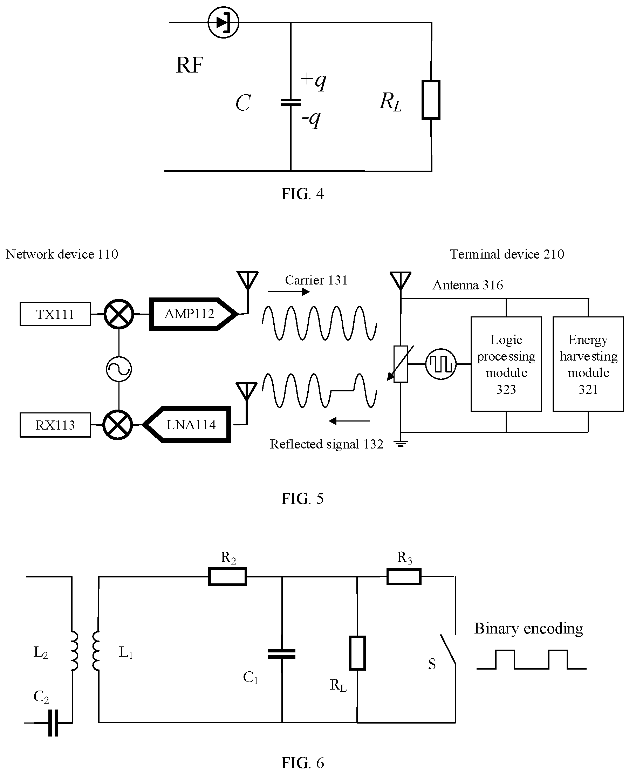

FIG. 4 is a schematic principle diagram of RF power harvesting performed by an energy harvesting module 321. The RF power harvesting is to harvest, based on the principle of electromagnetic induction, spatial electromagnetic wave energy using an RF module by electromagnetic induction and connection to a capacitor C and a load resistor RL that are connected in parallel to acquire energy required to drive the zero-power device to, for example, drive a low-power demodulation module, a modulation module, a sensor, and memory reading. Therefore, the zero-power terminal does not need any traditional battery.

FIG. 5 is a schematic principle diagram of a backscattering communication process performed by a backscattering communication module 322. The terminal device 210 receives a wireless signal carrier 131 transmitted by a transmit (TX) module 121 of the network device 120 via an amplifier (AMP) 122, modulates the wireless signal carrier 131, loads the information to be transmitted via a logic processing module 323, and harvests RF energy via the energy harvesting module 321. The terminal device 210 radiates a modulated reflected signal 132 using an antenna 316. This information transmission process is referred to as backscattering communication. A receive (RX) module 113 of the network device 110 receives the modulated reflected signal 132 using an LNA 124. Backscattering and load modulation functions are inseparable. Load modulation is a process of completing modulation by adjusting and controlling circuit parameters of an oscillation circuit of the terminal device 210 based on rhythms of data streams and then causing parameters such as impedance of electronic tags to change accordingly.

The load modulation technology mainly includes resistive load modulation and capacitive load modulation. FIG.

6 is a schematic principle diagram of resistive load modulation. In the resistive load modulation, the load resistor RL is connected in parallel to a third resistor R3, a switch S is turned on or turned off based on binary-coded control, turn-on or turn-off of the third resistor R3 may cause a change of voltage on a circuit, the load resistor RL is connected in parallel to a first capacitor C1, the load resistor RL is connected in series to a second resistor R2, and the second resistor R2 is connected in series to a first inductor L1. The first inductor L1 is coupled to a second inductor L2, and the second inductor L2 is connected in series to a second capacitor C2. In this way, ASK may be implemented. That is, signal modulation and signal transmission are implemented by adjusting an amplitude of the backscattering signal from the terminal device. Similarly, in the capacitive load modulation, a resonant frequency of a circuit may be changed based on turn-on or turn-off of a capacitor, such that FSK is implemented. That is, signal modulation and signal transmission are implemented by adjusting an operating frequency of the backscattering signal from the terminal device.

The terminal device 210 information modulation on an incoming signal by load modulation, such that the backscattering communication process is implemented.

Due to significant advantages such as extremely low cost, extremely low power consumption, and small size, the communication system illustrated in FIG. 3 is widely applicable in various industries, such as logistics, intelligent warehousing, smart agriculture, energy and power, industrial internet, and the like for vertical industries; and is also applicable in personal applications, such as smart wearables and smart home.

For example, the communication system is at least applicable to the following four scenarios.

(1) Object identification, such as logistics management, management of production line products, and supply chain management.
(2) Environmental monitoring, such as monitoring of temperature, humidity, and harmful gases in operating environment and natural environment.
(3) Positioning, such as indoor positioning, intelligent object tracking, and positioning of production line items.
(4) Intelligent control, such as intelligent control of various appliances in smart homes (turning on/off air conditioners and adjusting temperature) and intelligent control of various facilities in agricultural greenhouses (automatic irrigation and fertilization).

Therefore, the communication system illustrated in FIG. 3 further satisfies the communication requirements for developing the cellular IoT that has ultra-low cost and a ultra-small size and is battery-free/maintenance-free, for example, strict communication environment (extreme environment such as high temperature, extremely low temperature, high humidity, high voltage, high radiation, or high-speed movement), ultra-small size of terminals, ultra-low-cost IoT communication, and other IoT communication requirements that IoT technologies (such as narrow band-IoT (NB-IoT), machine-type communications (MTC) and RedCap) are facing.

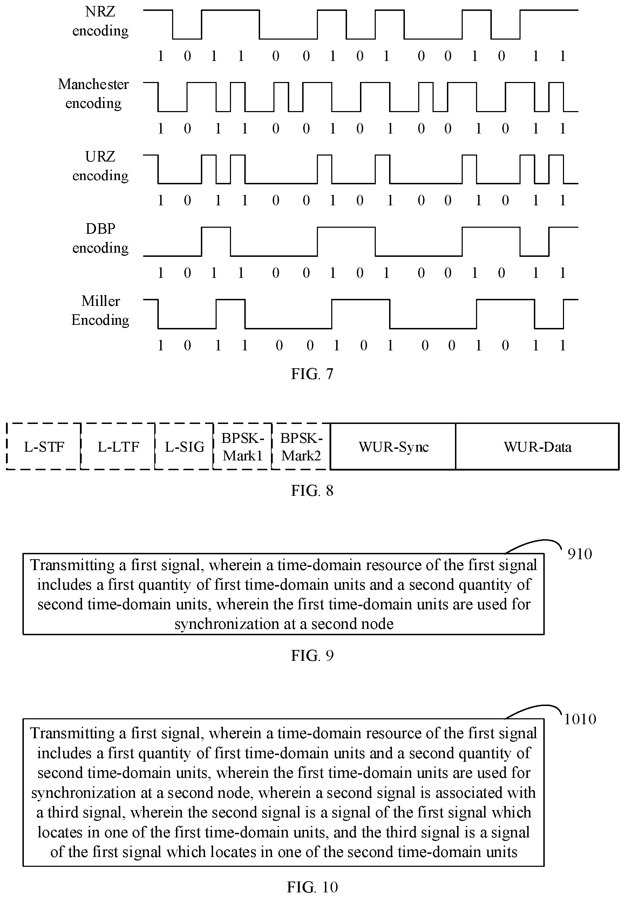

FIG. 7 is a schematic diagram of an encoding mode used by the wireless communication system illustrated in FIG. 1 or the communication system illustrated in FIG. 3. For data transmitted by the wireless communication system illustrated in FIG. 1 or the communication system illustrated in FIG. 3, binary "1" and binary "0" may be represented using different forms of codes. That is, binary "1" and binary "0" may be represented using different pulse signals. Several encoding methods are described herein.

- In non-return-to-zero (NRZ) encoding, binary "1" is represented by a high level, and binary "0" is represented by a low level. NRZ encoding in FIG. 8 is a schematic diagram of levels of binary data 101100101001011 encoded by NRZ encoding.

- Manchester encoding is also referred to as split-phase encoding. In Manchester encoding, a binary value is represented by a change (rise or fall) in a level in a half bit cycle within a bit length. A negative transition in a half bit cycle represents binary "1", and a positive transition in a half bit cycle represents binary "0". An error in data transmission means that when data bits transmitted by a plurality of communication devices simultaneously have different values, received rising and falling edges offset each other, resulting in an uninterrupted carrier signal throughout the entire bit length. In Manchester encoding, it is impossible that a state without a change is present within the bit length. A reader/writer may determine, using the error, a specific location where a collision occurs. Manchester encoding helps detect data transmission errors, and is generally used for data transmission from the terminal device (e.g., electronic tags) to the reader/writer when load modulation or backscattering modulation of carriers is adopted. Manchester encoding in FIG. 8 is a schematic diagram of levels of binary data 101100101001011 encoded by Manchester encoding.

- In unipolar return-to-zero (URZ) encoding, binary "1" is represented by a high level in a first half bit cycle of URZ encoding, and binary "1" is represented by a low-level signal that lasts for an entire bit cycle. URZ encoding in FIG. 8 is a schematic diagram of levels of binary data 101100101001011 encoded by URZ encoding.

- In differential binary phase (DBP) encoding, binary "0" is represented by any edge in a half bit cycle, and binary "1" is represented by no edge. In addition, levels are inverted at the beginning of each bit cycle. It is relatively easy for the receiver to reconstruct a bit beat. DBP encoding in FIG. 8 is a schematic diagram of levels of binary data 101100101001011 encoded by DBP encoding.

- In Miller encoding, binary "1" is represented by any edge in a half bit cycle, and binary "0" is represented by a constant level in a next bit cycle. Level alternation occurs at the beginning of a bit cycle. It is relatively easy for the receiver to reconstruct a bit beat. Miller encoding in FIG. 8 is a schematic diagram of levels of binary data 101100101001011 encoded by Miller encoding.
- In differential encoding, each binary "1" to be transmitted may cause a change in signal level, while for binary "0", the signal level remains the same.

It should be noted that the encoding schemes are illustrated for the encoding method in the wireless communication system illustrated in FIG. 2 or the communication system illustrated in FIG. 4, and are not intended to limit the present disclosure.

RF and baseband circuits of the terminal device 210 illustrated in FIG. 2 or FIG. 3 are very simple. For example, the terminal device 210 illustrated in FIG. 2 or FIG. 3 does not require all or part of components such as an LNA, a PA, a crystal oscillator, or an ADC, and thus offers many advantages such as a small size, a low weight, a very low price, a long service life, and a maintenance-free operation.

However, such a design also brings a number of technical challenges. For example, For low device complexity to reduce power consumption of the device, the device does not use a crystal oscillator as an oscillator thereof, but instead uses a simple oscillator, such as an RC oscillator or an LC oscillator. These oscillators are easy to implement, and consume significantly less power than the crystal oscillator. However, these oscillators have poor clock and frequency accuracy, with a frequency stability, for example, of 200 parts per million (ppm). In the case where the terminal device 210 operates at 920 MHz, the frequency stability of 200 ppm causes an error of 184 kHz (900 MHz*200*10-6=184 kHz). For example, in the case where the terminal device 210 operates at 2400 MHz, the frequency stability of 200 ppm causes an error of 480 kHz (2400 MHz*200*10-6=480 kHz). The large frequency offset not only affects subsequent communication operations, but also causes deviation from a working channel specified by a frequency specification, thereby causing interference to other devices or systems. For example, 20 channels are divided in an industrial, scientific, and medical (ISM) frequency band of 920 MHz to 925 MHz, with each channel having a bandwidth of 250 kHz. Therefore, in the case where the frequency offset error is 184 kHz, the terminal device 210 is likely to deviate from an accurate working channel, causing errors in signal transmission and reception or causing interference to other devices on adjacent channels.

Therefore, a synchronization solution needs to be designed to ensure, as much as possible, that the terminal device 210 illustrated in FIG. 2 or FIG. 3 operates in an accurate time-domain range and/or frequency-domain range. The accurate time-domain range may be a time-domain range configured by the network device, a time-domain range defined by a communication protocol, or a time-domain range negotiated by the network device and the terminal device. The accurate frequency-domain may be a frequency-domain range configured by the network device, a frequency-domain range defined by a communication protocol, or a frequency-domain range negotiated by the network device and the terminal device.

In the embodiments of the present disclosure, the term "defined" may be implemented by pre-storing a corresponding code, a corresponding table, or another method that may be used to indicate relevant information in a communication device (e.g., a terminal device or a network device), and a specific implementation thereof is not limited in the present disclosure. For example, the term definition by the communication protocol may be predefinition in the communication protocol.

FIG. 8 is a schematic diagram of a format of a data packet according to some exemplary embodiments of the present disclosure. The data packet may be a physical layer protocol data unit (PPDU) received by a terminal device 210 illustrated in FIG. 2 or FIG. 3.

A WUR-Synchronization (Sync) field may be used to for time-domain synchronization and indicating a data transmission rate, for example, indicating that the data transmission rate is a high dynamic range (HDR) or a low dynamic range (LDR).

A WUR-Sync field for indicating the LDR consists of one or two identical W sequences. One W sequence corresponds to 32 bits, and each bit corresponds to a multi-carrier on-off keying (MC-OOK) symbol with a length of 2 $\mu$s. Exemplarily, the W sequence is illustrated in a formula (3).

$$W= [10100100101110110001011100111000] \qquad (3)$$

A WUR-Sync field for indicating the HDR consists of a $\overline{W}$ sequence, and the $\overline{W}$ sequence is generated by performing bitwise complement on the W sequence. The bitwise complement may be understood as inverting a value of each bit. For example, in a case where a value of a first bit in the W sequence is 0, a value of a first bit in the $\overline{W}$ sequence is 1 after the bitwise complement.

Exemplarily, the $\overline{W}$ sequence is illustrated in a formula (4).

$$\overline{W}= [01011011010001001110100011000111] \qquad (4)$$

A WUR-Data field is used for transmitting data, and may also adopt an on-off keying (OOK) modulation method or an MC-OOK modulation method.

Optionally, a bandwidth occupied by the WUR-Sync field and the WUR-Data field is 4 MHz at the middle of a frequency-domain resource.

In addition to the WUR-Sync field and the WUR-Data field, the PPDU may further include at least one of a legacy short training field (L-STF), a legacy long training field (L-LTF), a legacy signal (L-SIG) field, a binary phase shift keying (BPSK)-Mark1 field, a BPSK-Mark2 field, or the like. For design of these optional fields, reference may be made to related technologies. These optional fields is compatible with terminal devices other than the terminal device 210, facilitating identification of the PPDU by the other terminal devices and avoiding data packet collision.

FIG. 9 is a schematic flowchart of a communication method according to some exemplary embodiments of the present disclosure. The communication method is performed by a first node, and includes the following process.

**In S910,** a first signal is transmitted, wherein a time-domain resource of the first signal includes a first quantity of first time-domain units and a second quantity of second time-domain units, wherein the first time-domain units are used for synchronization at a second node.

In some embodiments, the first quantity is the same as or different from the second quantity. That is, a quantity of first time-domain units is the same as or different from a quantity of second time-domain units.

In some embodiments, a signal of the first signal in a first time-domain unit is referred to as a second signal, and a signal of the first signal in a second time-domain unit is referred to as a third signal. The second signal is associated with the third signal.

The second signal may also be referred to as a first signal segment or a first sub-signal, and the third signal may also be referred to as a second signal segment or a second sub-signal.

In some embodiments, the first signal includes a WUR-Sync field and/or a WUR-Data field illustrated in FIG. 8.

The first node is a transmitter of the first signal. Exemplarily, in a downlink scenario, the transmitter is a network device (for example, a network device illustrated in FIG. 1 or FIG. 3). In an uplink scenario, the transmitter is a terminal device (for example, a terminal device illustrated in FIG. 1 or FIG. 2 or FIG. 3). In a sidelink (SL) scenario, the transmitter is a first terminal device (for example, the terminal device illustrated in FIG. 1 or FIG. 2 or FIG. 3).

The terminal device illustrated in FIG. 2 or FIG. 3 may also be referred to as a low-power device, an ultra-low-power device, a zero-power device, a passive IoT device, or an A-IoT device.

The second node is a receiver of the first signal. Exemplarily, in the downlink scenario, the receiver is a terminal device (for example, the terminal device illustrated in FIG. 1 or FIG. 2 or FIG. 3). In the uplink scenario, the receiver is a network device (for example, the network device illustrated in FIG. 1 or FIG. 3). In the SL scenario, the receiver is a second terminal device (for example, the terminal device illustrated in FIG. 1 or FIG. 2 or FIG. 3).

In the present disclosure, synchronization includes time-domain synchronization and/or frequency-domain synchronization.

In the present disclosure, a time-domain unit includes at least one of a frame, a subframe, a slot, a mini-slot, a sub-slot, a symbol, a symbol group, or an element with another time-domain unit.

The symbol includes at least one of an OFDM symbol, a quadrature phase shift keying (QPSK) symbol, an ASK symbol, an FSK symbol, an OOK symbol, an MC-OOK symbol, or a quadrature amplitude modulation (QAM) symbol.

In some embodiments, the first time-domain unit has a same time-domain length as the second time-domain unit, or the first time-domain unit has a different time-domain length from the second time-domain unit.

In summary, in the communication method according to the embodiments of the present disclosure, the first time-domain unit is used for the synchronization. A synchronization effect of the first time-domain unit improves reception quality of the third signal and ensures reception accuracy of information carried by the third signal. In addition, a first signal whose time-domain resource includes the first time-domain unit enables the second node to work within an accurate time-domain range and/or frequency-domain range as much as possible, such that the transmission quality of the second node is ensured, the interference between the second node and another device is avoided, and the overall transmission efficiency and communication quality of a communication system are improved.

In some embodiments, S910 is implemented as S1010, as illustrated in FIG. 10. FIG. 10 is a schematic flowchart of a communication method according to some exemplary embodiments of the present disclosure. The communication method is performed by a first node illustrated in FIG. 9, and includes the following process.

**In S1010,** a first signal is transmitted, wherein a time-domain resource of the first signal includes a first quantity of first time-domain units and a second quantity of second time-domain units, wherein the first time-domain units are used for synchronization at a second node, and a second signal is associated with a third signal, wherein the second signal is a signal of the first signal which locates in a first time-domain unit, and the third signal is a signal of the first signal which locates in a second time-domain unit.

The first node is a transmitter of the first signal. In some embodiments, the first signal is transmitted in a unicast, multicast, or broadcast manner. Exemplarily, in a downlink scenario, the transmitter is a network device (for example, a network device illustrated in FIG. 1 or FIG. 3). In an uplink scenario, the transmitter is a terminal device (for example, a terminal device illustrated in FIG. 1 or FIG. 2 or FIG. 3). In an SL scenario, the transmitter is a first terminal device (for example, the terminal device illustrated in FIG. 1 or FIG. 2 or FIG. 3).

The second node is a receiver of the first signal. In some embodiments, at least one second node is present. Exemplarily, in the downlink scenario, the receiver is a terminal device (for example, the terminal device illustrated in FIG. 1 or FIG. 2 or FIG. 3). In the uplink scenario, the receiver is a network device (for example, the network device illustrated in FIG. 1 or FIG. 3). In the SL scenario, the receiver is a second terminal device (for example, the terminal device illustrated in FIG. 1 or FIG. 2 or FIG. 3).

In some embodiments, the first signal includes a WUR-Sync field and/or a WUR-Data field illustrated in FIG. 8.

**The first time-domain unit and the second time-domain unit are first described hereinafter:**
In some embodiments, the signal of the first signal in the first time-domain unit is referred to as the second signal, and the signal of the first signal in the second time-domain unit is referred to as the third signal. The second signal is associated with the third signal.

In some embodiments, the second signal is determined based on at least part of the third signal. In some embodiments, the second signal is determined based on part of the third signal, or the second signal is determined based on the third signal. The at least part of the third signal may also be regarded as at least part of the signal associated with the second signal.

In some embodiments, the second signal is the same as the at least part of the third signal. In some embodiments, the second signal is the same as the part of the third signal, or the second signal is the same as the third signal.

In some embodiments, the at least part of the third signal is located at an end portion of the third signal, or at a start portion of the third signal, or at a middle portion of the third signal.

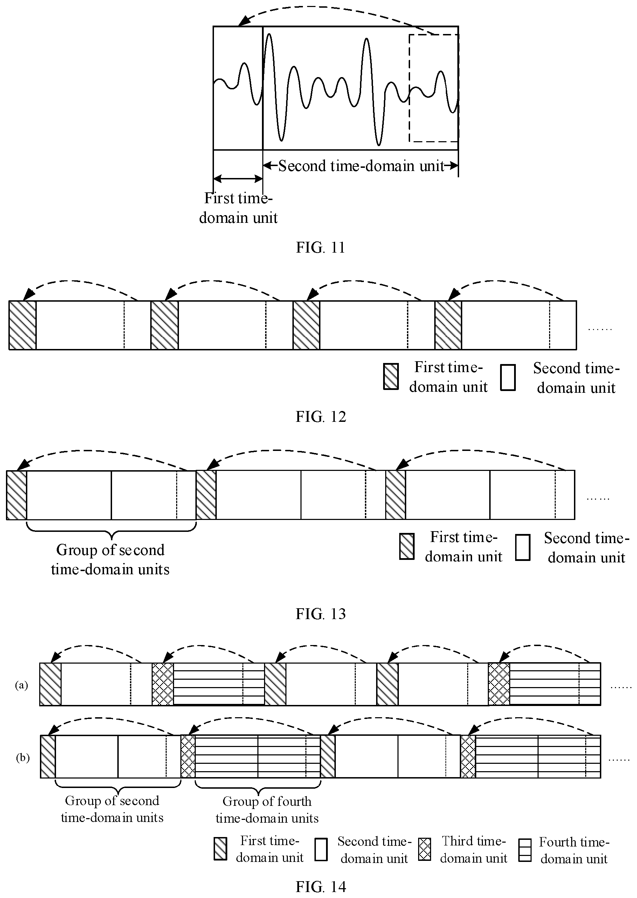

Exemplarily, as illustrated in FIG. 11, a second signal in a first time-domain unit is determined based on part of the signal at an end portion of the third signal in a second time-domain unit.

In some embodiments, the at least part of the third signal is contiguous. It can also be understood as that a time-domain resource of the at least part of the third signal is contiguous.

Based on values of the first quantity and the second quantity, cases where the first quantity is equal to the second quantity and the first quantity is not equal to the second quantity are separately described hereinafter:

In the first case, the first quantity is equal to the second quantity.

In some embodiments, the first quantity is equal to the second quantity, that is, the quantity of first time-domain units is the same as the quantity of second time-domain units. Each first time-domain unit is located before an associated second time-domain unit.

The second time-domain unit associated with the first time-domain unit is a second time-domain unit in which a third signal associated with a second signal in the first time-domain unit is located. The third signal associated with the second signal is a third signal that overlaps with the second signal, or a third signal on which determination of the second signal is based.

Exemplarily, as illustrated in FIG. 12, the time-domain resource of the first signal includes a plurality of first time-domain units and a plurality of second time-domain units. A second signal in each first time-domain unit is determined based on part of the third signal in each second time-domain unit. Each first time-domain unit is located before an associated second time-domain unit.

In the second case, the first quantity is not equal to the second quantity.

In some embodiments, the first quantity is not equal to the second quantity, that is, the quantity of first time-domain units is different from the quantity of second time-domain units. Each first time-domain unit is located before a group of second time-domain units. It can also be understood as that each first time-domain unit is located before a group of associated second time-domain units.

The group of second time-domain units includes at least two contiguous second time-domain units, and the at least two second time-domain units include a second time-domain unit associated with the first time-domain unit. The second time-domain unit associated with the first time-domain unit is a second time-domain unit in which a third signal associated with a second signal in the first time-domain unit is located. The third signal associated with the second signal is a third signal that overlaps with the second signal, or a third signal on which determination of the second signal is based.

Exemplarily, as illustrated in FIG. 13, the time-domain resource of the first signal includes a first time-domain units and b second time-domain units, where a<b. Second signals in the first time-domain units are respectively determined based on parts of the third signals in second time-domain units. Each first time-domain unit is located before a group of associated second time-domain units. The group of second time-domain units includes at least two contiguous second time-domain units.

In some embodiments, signals of the first signal which locate in the second quantity of second time-domain units are formed based on a first sequence group, and the first sequence group includes at least one first sequence element and at least one second sequence element.

The first sequence element takes a first value, and the second sequence element takes a second value.

In some embodiments, the signals of the first signal which locate in the second quantity of second time-domain units are modulated based on the first sequence group.

In some embodiments, the first sequence group is acquired by encoding first information, a quantity of bits corresponding to the first sequence group is X times a quantity of bits corresponding to the first information, and each bit corresponding to the first information corresponds to at least one first sequence element and at least one second sequence element.

In some embodiments, the first information is configured by the network device, or defined by a communication protocol.

In some embodiments, an encoding method of the first information is configured by the network device, or defined by the communication protocol.

In some embodiments, the first sequence group is configured by the network device, or defined by the communication protocol.

In some embodiments, at least one of the following items corresponding to the first sequence group is associated with a capability of the terminal device (which is implemented as the first node or the second node):

- a quantity of first sequence elements;
- a quantity of second sequence elements;
- a quantity of second sequence elements between two first sequence elements; or
- a quantity of first sequence elements between two second sequence elements.

In some embodiments, the second signal in the first time-domain unit is implemented as a cyclic prefix (CP) and/or a guard interval (GI).

In some embodiments, the first quantity of first time-domain units are used for synchronization at the second node and reduce or avoid inter-symbol interference.

In some embodiments, the quantity of first time-domain units and/or the quantity of second time-domain units are associated with the capability of the terminal device. That is, the first quantity and/or the second quantity are associated with the capability of the terminal device.

In some embodiments, envelope detection results of a second signal and at least part of the associated third signal are used for the time-domain synchronization, and/or correlation detection results of the second signal and the at least part of the associated third signal are used for the frequency-domain synchronization.

In some embodiments, envelope detection results of p groups of second signals and at least part of associated third signals are used for the time-domain synchronization, and/or correlation detection results of the p groups of second signals and the at least part of signals in the associated groups of third signals are used for the frequency-domain synchronization.

The p groups of second signals are signals of the first signal which locate in p groups of first time-domain units, and p is an integer greater than or equal to 1.

In some embodiments, each group of second signals includes signals of the first signal which locate in at least two first time-domain units.

In some embodiments, a second time-domain unit is present between the p groups of first time-domain units, or a plurality of second time-domain units are present between the p groups of first time-domain units.

For synchronization based on the first time-domain unit, reference may be made to relevant content in the following S2110.

**Then, a third time-domain unit and a fourth time-domain unit are described:**

In some embodiments, in addition to the first quantity of first time-domain units and the second quantity of second time-domain units, the time-domain resource of the first signal further includes a third quantity of third time-domain units and a fourth quantity of fourth time-domain units. The third quantity of third time-domain units are used for synchronization at the second node. A fourth signal is associated with a fifth signal, the fourth signal is a signal of the first signal which locates in a third time-domain unit, and the fifth signal is a signal of the first signal which locates in a fourth time-domain unit.

The fourth signal may also be referred to as a third signal segment or a third sub-signal, and the fifth signal may also be referred to as a fourth signal segment or a fourth sub-signal.

In some embodiments, the fifth signal is determined based on at least part of the third signal. It can also be understood as that the fifth signal is associated with the at least part of the third signal. In some embodiments, the fifth signal is determined based on part of the third signal, or the fifth signal is determined based on the third signal.

In some embodiments, at least part of the fifth signal is located at an end portion of the fifth signal, or at a start portion of the fifth signal, or at a middle portion of the fifth signal.

In some embodiments, the fifth signal is the same as the part of the third signal, or the fifth signal is the same as the third signal. It can also be understood as that signals of the first signal which locate in the fourth quantity of fourth time-domain units are identical to part of signals of the first signal which locate in the second quantity of second time-domain units.

In some embodiments, the signals of the first signal which locate in the fourth quantity of fourth time-domain units are associated with the signals of the first signal which locate in the second quantity of second time-domain units, or are associated with part of signals of the first signal which locate in the second quantity of second time-domain units. It can also be understood as that the signals of the first signal which locate in the fourth quantity of fourth time-domain units are determined based on the signals of the first signal which locate in the second quantity of second time-domain units, or are determined based on the part of signals of the first signal which locate in the second quantity of second time-domain units.

In some embodiments, the signals of the first signal which locate in the fourth quantity of fourth time-domain units are formed based on a second sequence group, and the second sequence group includes at least one first sequence element.

The first sequence element takes a first value.

In some embodiments, the fourth quantity of fourth time-domain units are periodically distributed in the time-domain resource of the first signal, or the fourth quantity of fourth time-domain units are aperiodically distributed in the time-domain resource of the first signal.

In some embodiments, at least one of a quantity of fourth time-domain units, time-domain positions of the fourth time-domain units, duration of the fourth time-domain units, or duration of third time-domain units associated with the fourth time-domain units is configured by the network device.

In some embodiments, the at least one of the quantity of fourth time-domain units, the time-domain positions of the fourth time-domain units, the duration of the fourth time-domain units, or the duration of the third time-domain units associated with the fourth time-domain unit is associated with to-be-transmitted data. Alternatively, the at least one of the quantity of fourth time-domain units, the time-domain positions of the fourth time-domain units, the duration of the fourth time-domain units, or the duration of the third time-domain units associated with the fourth time-domain unit is associated with data carried by the second time-domain unit. Alternatively, the at least one of the quantity of fourth time-domain units, the time-domain positions of the fourth time-domain units, the duration of the fourth time-domain units, or the duration of the third time-domain units associated with the fourth time-domain unit is associated with information carried by the second time-domain unit.

Exemplarily, the time-domain positions of the fourth time-domain units are associated with at least one of a rate, an encoding method, a modulation method, a code length, or a bandwidth of the to-be-transmitted data.

In some embodiments, lengths of third time-domain units associated with different fourth time-domain units are the same or different.

In some embodiments, lengths of the different fourth time-domain units are the same or different.

In some embodiments, a length of the fourth time-domain unit is the same as a length of the second time-domain unit, or a length of the fourth time-domain unit is K times a length of the second time-domain unit, or a length of the fourth time-domain unit is 1/K of a length of the second time-domain unit. K is a positive integer.

In some embodiments, a length of the third time-domain unit is the same as or different from a length of the first time-domain unit.

In some embodiments, the length of the third time-domain unit satisfies at least one of the following conditions:

· defined by the communication protocol;
· configured by the network device;
associated with the capability of the terminal device (which is practiced as the first node or the second node);
· associated with a transmission rate of the first signal; or
· associated with a subcarrier spacing in a frequency-domain resource of the first signal.

In some embodiments, a quantity of third time-domain units is the same as a quantity of fourth time-domain units. That is, the third quantity is the same as the fourth quantity. Each third time-domain unit is located before an associated fourth time-domain unit.

The fourth time-domain unit associated with the third time-domain unit is a fourth time-domain unit in which a fifth signal associated with a fourth signal in the third time-domain unit is located. The fifth signal associated with the fourth signal is a fifth signal that overlaps with the fourth signal, or a fifth signal on which determination of the fourth signal is based.

In some embodiments, the quantity of third time-domain units is less than the quantity of fourth time-domain units. That is, the third quantity is less than the fourth quantity. Each third time-domain unit is located before a group of fourth time-domain units. It can also be understood as that each third time-domain unit is located before a group of associated fourth time-domain units.

The group of fourth time-domain units includes at least two contiguous fourth time-domain units, and the at least two fourth time-domain units include a fourth time-domain unit associated with the third time-domain unit. The fourth time-domain unit associated with the third time-domain unit is a fourth time-domain unit in which a fifth signal associated with a fourth signal in the third time-domain unit is located. The fifth signal associated with the fourth signal is a fifth signal that overlaps with the fourth signal, or a fifth signal on which determination of the fourth signal is based.

Exemplarily, as illustrated in FIG. 14, a fourth signal in a third time-domain unit is determined based on part of the signal at an end portion of the fifth signal in a fourth time-domain unit. As illustrated in FIG. 14(a), each third time-domain unit is located before the associated fourth time-domain unit. Alternatively, as illustrated in FIG. 14(b), each third time-domain unit is located before the group of associated fourth time-domain units, and a group of fourth time-domain units includes at least two contiguous fourth time-domain units.

In some embodiments, a start position of a third time-domain unit is an end position of a second time-domain unit. Alternatively, a start position of a third time-domain unit is an end position of a fourth time-domain unit. Alternatively, a start position of a third time-domain unit is a middle position of a second time-domain unit.

In some embodiments, a sum of time-domain lengths of a third time-domain unit and an associated fourth time-domain unit is equal to a sum of time-domain lengths of a first time-domain unit and an associated second time-domain unit. Alternatively, a sum of time-domain lengths of a third time-domain unit and an associated fourth time-domain unit is less than a sum of time-domain lengths of a first time-domain unit and an associated second time-domain unit. Alternatively, a sum of time-domain lengths of a third time-domain unit and an associated fourth time-domain unit is greater than a sum of time-domain lengths of a first time-domain unit and an associated second time-domain unit.

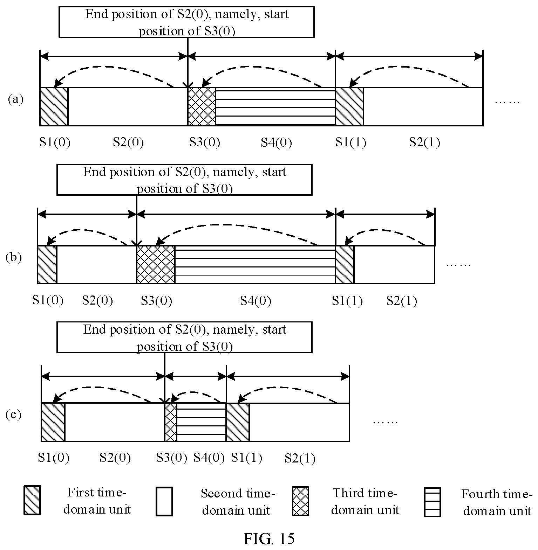

FIG. 15 to FIG. 17 show configuration schemes of the third time-domain unit and the fourth time-domain unit in some embodiments. It should be noted that in FIG. 15 to FIG. 17, description is provided using an example in which the time-domain length of the third time-domain unit is less than the time-domain length of the fourth time-domain unit, but this does not imply any limitation on a relationship between the time-domain length of the third time-domain unit and the time-domain length of the fourth time-domain unit. The time-domain length of the third time-domain unit may be equal to or greater than the time-domain length of the fourth time-domain unit.

Exemplarily, as illustrated in FIG. 15(a), a start position of third time-domain unit S3(0) is an end position of second time-domain unit S2(0), and a sum of time-domain lengths of third time-domain unit S3(0) and associated fourth time-domain unit S4(0) is equal to the sum of the time-domain lengths of the first time-domain unit and the associated second time-domain unit.

Exemplarily, as illustrated in FIG. 15(b), a start position of third time-domain unit S3(0) is an end position of second time-domain unit S2(0), and a sum of time-domain lengths of third time-domain unit S3(0) and associated fourth time-domain unit S4(0) is greater than the sum of the time-domain lengths of the first time-domain unit and an associated second time-domain unit. For example, the sum of the time-domain lengths of the third time-domain unit and the associated fourth time-domain unit is K times the sum of the time-domain lengths of the first time-domain unit and the associated second time-domain unit. K is greater than 1.

Exemplarily, as illustrated in FIG. 15(c), a start position of third time-domain unit S3(0) is an end position of second time-domain unit S2(0), and a sum of time-domain lengths of third time-domain unit S3(0) and associated fourth time-domain unit S4(0) is less than the sum of the time-domain lengths of the first time-domain unit and the associated second time-domain unit. For example, the sum of the time-domain lengths of the third time-domain unit and the associated fourth time-domain unit is 1/K times the sum of the time-domain lengths of the first time-domain unit and the associated second time-domain unit. K is less than 1.

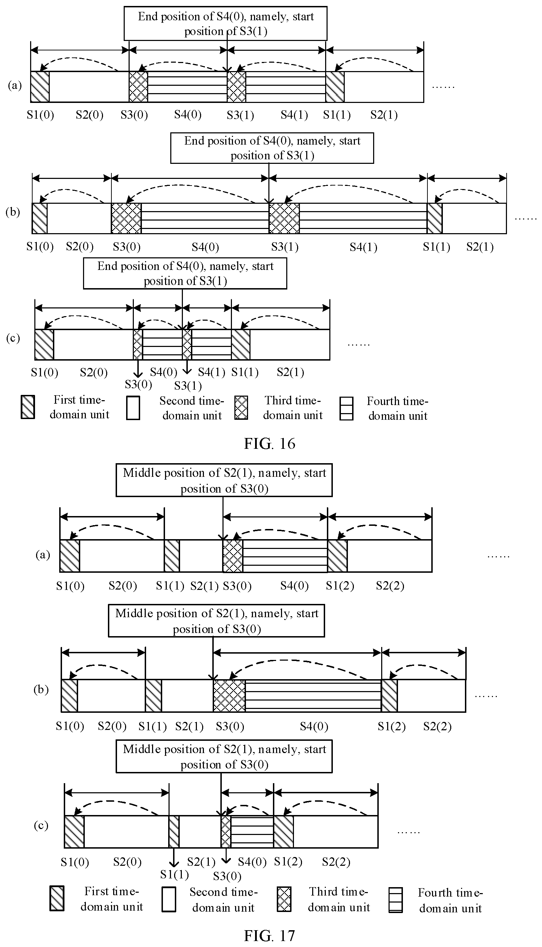

Exemplarily, as illustrated in FIG. 16(a), a start position of third time-domain unit S3(1) is an end position of second time-domain unit S4(0), and a sum of time-domain lengths of the third time-domain unit and the associated fourth time-domain unit is equal to the sum of the time-domain lengths of the first time-domain unit and the associated second time-domain unit.

Exemplarily, as illustrated in FIG. 16(b), a start position of third time-domain unit S3(1) is an end position of fourth time-domain unit S4(0), and a sum of time-domain lengths of the third time-domain unit and the associated fourth time-domain unit is greater than the sum of the time-domain lengths of the first time-domain unit and the associated second time-domain unit. For example, the sum of the time-domain lengths of the third time-domain unit and the associated fourth time-domain unit is K times the sum of the time-domain lengths of the first time-domain unit and the associated second time-domain unit. K is greater than 1.

Exemplarily, as illustrated in FIG. 16(c), a start position of third time-domain unit S3(1) is an end position of fourth time-domain unit S4(0), and a sum of time-domain lengths of the third time-domain unit and the associated fourth time-domain unit is less than the sum of the time-domain lengths of the first time-domain unit and the associated second time-domain unit. For example, the sum of the time-domain lengths of the third time-domain unit and the associated fourth time-domain unit is 1/K times the sum of the time-domain lengths of the first time-domain unit and the associated second time-domain unit. K is less than 1.

Exemplarily, as illustrated in FIG. 17(a), a start position of third time-domain unit S3(0) is a middle position of second time-domain unit S2(1), and a sum of time-domain lengths of third time-domain unit S3(0) and associated fourth time-domain unit S4(0) is equal to a sum of time-domain lengths of first time-domain unit S1(0) and associated second time-domain unit S2(0).

Exemplarily, as illustrated in FIG. 17(b), a start position of third time-domain unit S3(0) is a middle position of second time-domain unit S2(1), and a sum of time-domain lengths of third time-domain unit S3(0) and associated fourth time-domain unit S4(0) is greater than a sum of time-domain lengths of first time-domain unit S1(0) and associated second time-domain unit S2(0). For example, the sum of the time-domain lengths of the third time-domain unit and the associated fourth time-domain unit is K times the sum of the time-domain lengths of the first time-domain unit and the associated second time-domain unit. K is greater than 1.

Exemplarily, as illustrated in FIG. 17(c), a start position of third time-domain unit S3(0) is a middle position of second time-domain unit S2(1), and a sum of time-domain lengths of third time-domain unit S3(0) and associated fourth time-domain unit S4(0) is less than a sum of time-domain lengths of first time-domain unit S1(0) and associated second time-domain unit S2(0). For example, the sum of the time-domain lengths of the third time-domain unit and the associated fourth time-domain unit is 1/K times the sum of the time-domain lengths of the first time-domain unit and the associated second time-domain unit, wherein K is less than 1.

It should be noted that in FIG. 17, in a case where the start position of the third time-domain unit is the middle position of the second time-domain unit, the start position of the third time-domain unit may be at a 1/2 position of the second time-domain unit, at a 1/3 position of the second time-domain unit, at a 1/4 position of the second time-domain unit, at a 1/5 position of the second time-domain unit, or the like. That is, the start position of the third time-domain unit is an end position of an incomplete second time-domain unit.

In some embodiments, the first signal is formed by puncturing at least one third time-domain unit, and/or the first signal is formed by puncturing at least one fourth time-domain unit.

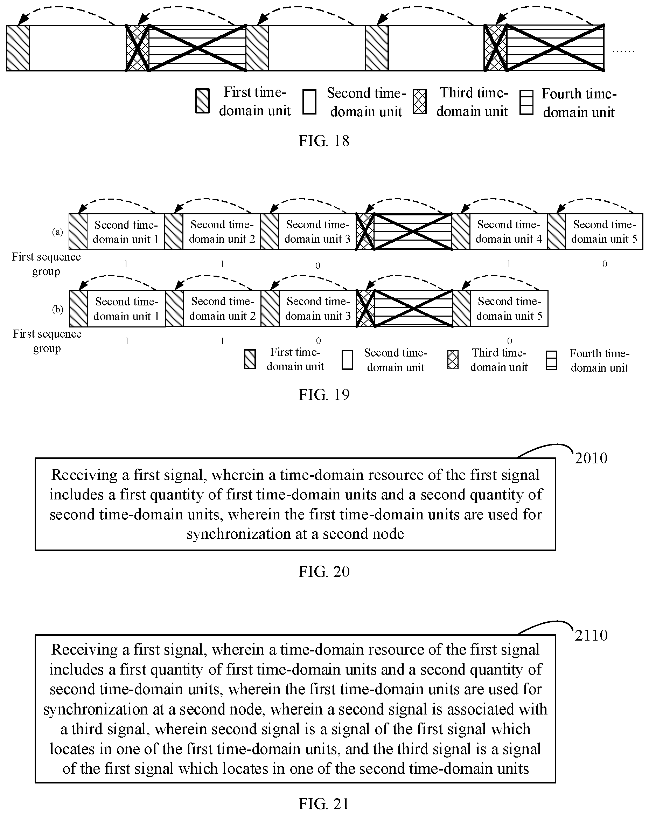

Exemplarily, as illustrated in FIG. 18, the time-domain resource of the first signal includes a first time-domain units, b second time-domain units, c third time-domain units, and d fourth time-domain units. Each first time-domain unit is located before an associated second time-domain unit, and each third time-domain unit is located before an associated fourth time-domain unit. A start position of each third time-domain unit is an end position of a second time-domain unit. At each third time-domain unit and fourth time-domain unit, puncturing is performed, that is, data, synchronization information, indication information, and the like are not transmitted in each third time-domain unit and fourth time-domain unit.

In some embodiments, two second time-domain units correspond to two adjacent sequence elements in the first sequence group; or two second time-domain units correspond to two non-adjacent sequence elements in the first sequence group. A third time-domain unit is present between the two second time-domain units.

Exemplarily, as illustrated in FIG. 19(a), the first sequence group is "11010", a third time-domain unit is present between second time-domain unit 3 and second time-domain unit 4, and second time-domain unit 3 and fourth time-domain unit 4 correspond to a third bit (with a value of "0") and a fourth bit (with a value of "1") in the first sequence group. Therefore, the scheme illustrated in FIG. 19(a) is understood as that transmission of the data, the synchronization information, the indication information, and the like is delayed in a case where the third time-domain unit and/or the fourth time-domain unit are punctured.

Exemplarily, as illustrated in FIG. 19(b), the first sequence group is "11010", a third time-domain unit is present between second time-domain unit 3 and second time-domain unit 5, and the second time-domain unit 3 and fourth time-domain unit 5 correspond to a third bit (with a value of "0") and a fifth bit (with a value of "0") in the first sequence group. Therefore, the scheme illustrated in FIG. 19(b) is understood that transmission of the data, the synchronization information, the indication information, and the like is not delayed in a case where the third time-domain unit and/or the fourth time-domain unit are punctured.

In some embodiments, the quantity of third time-domain units and/or the quantity of fourth time-domain units are associated with the capability of the terminal device. That is, the third quantity and/or the fourth quantity are associated with the capability of the terminal device.

In some embodiments, envelope detection results of a fourth signal and at least part of an associated fifth signal are used for the time-domain synchronization, and/or correlation detection results of the fourth signal and the at least part of the associated fifth signal are used for the frequency-domain synchronization.

In some embodiments, envelope detection results of q groups of fourth signals and at least part of signals in associated groups of fifth signals are used for the time-domain synchronization, and/or correlation detection results of the q groups of fourth signals and the at least part of signals in the associated groups of fifth signals are used for the frequency-domain synchronization.

The q groups of fourth signals are signals of the first signal which locate in q groups of third time-domain units, and q is an integer greater than or equal to 1.

In some embodiments, each group of fourth signals includes signals of the first signal which locate in at least two third time-domain units.

In some embodiments, a fourth time-domain unit is present between the q groups of third time-domain units, or a plurality of fourth time-domain units are present between the q groups of third time-domain units.

For synchronization based on the third time-domain unit, reference may be made to relevant content in the following S2110.

In summary, in the communication method according to the embodiments of the present disclosure, the first time-domain unit is used for the synchronization. A synchronization effect of the first time-domain unit improves reception quality of the third signal and ensures reception accuracy of information carried by the third signal. In addition, a first signal whose time-domain resource includes the first time-domain unit enables the second node to work within an accurate time-domain range and/or frequency-domain range as much as possible, such that the transmission quality of the second node is ensured, the interference between the second node and another device is avoided, and the overall transmission efficiency and communication quality of a communication system are improved. Moreover, the third time-domain unit is also used for the synchronization. A synchronization effect of the third time-domain unit improves reception quality of the fifth signal and ensures reception accuracy of information carried by the fifth signal. The fourth signal and the fifth signal serve as reference signals in a process of receiving the first signal, such that the reception accuracy of the information carried by the third signal is ensured. A first signal whose time-domain resource includes the third time-domain unit and the fourth time-domain unit further enables the second node to further perform time-frequency synchronization in the process of receiving the first signal, such that a time/frequency-domain calibration degree of the first signal in the reception process is ensured, and an impact on reception quality of the first signal due to continuous time/frequency-domain deviation of the first signal in the reception process is avoided. The first time-domain unit and the third time-domain unit improve synchronization performance, and enhances transmission quality and efficiency of the first signal. In addition, a variety of configuration schemes for the first time-domain unit, the second time-domain unit, the third time-domain unit, and the fourth time-domain unit are provided to satisfy synchronization requirements in various communication scenarios.

FIG. 20 is a schematic flowchart of a communication method according to some exemplary embodiments of the present disclosure. The communication method is performed by a second node, and includes the following process.

In S2010, a first signal is received, wherein a time-domain resource of the first signal includes a first quantity of first time-domain units and a second quantity of second time-domain units, wherein the first time-domain units are used for synchronization at the second node.

In some embodiments, the first quantity is the same as or different from the second quantity. That is, a quantity of first time-domain units is the same as or different from a quantity of second time-domain units.

In some embodiments, a signal of the first signal in a first time-domain unit is referred to as a second signal, and a signal of the first signal in a second time-domain unit is referred to as a third signal. The second signal is associated with the third signal.

The second signal may also be referred to as a first signal segment or a first sub-signal, and the third signal may also be referred to as a second signal segment or a second sub-signal.

In some embodiments, the first signal is implemented as a WUR-Sync field and/or a WUR-Data field illustrated in FIG. 9.

The second node is a receiver of the first signal. Exemplarily, in a downlink scenario, the receiver is a terminal device (for example, a terminal device illustrated in FIG. 1 or FIG. 2 or FIG. 3). In an uplink scenario, the receiver is a network device (for example, a network device illustrated in FIG. 1 or FIG. 3). In an SL scenario, the receiver is a second terminal device (for example, the terminal device illustrated in FIG. 1 or FIG. 2 or FIG. 3).

The terminal device illustrated in FIG. 2 or FIG. 3 may also be referred to as a low-power device, an ultra-low-power device, a zero-power device, a passive IoT device, or an A-IoT device.

A first node is a transmitter of the first signal. Exemplarily, in the downlink scenario, the transmitter is a network device (for example, the network device illustrated in FIG. 1 or FIG. 3). In the uplink scenario, the transmitter is a terminal device (for example, the terminal device illustrated in FIG. 1 or FIG. 2 or FIG. 3). In the SL scenario, the transmitter is a first terminal device (for example, the terminal device illustrated in FIG. 1 or FIG. 2 or FIG. 3).

In the present disclosure, synchronization includes time-domain synchronization and/or frequency-domain synchronization.

In the present disclosure, a time-domain unit includes at least one of a frame, a subframe, a slot, a mini-slot, a sub-slot, a symbol, a symbol group, or an element with another time-domain unit.

In some embodiments, the first time-domain unit has a same time-domain length as the second time-domain unit, or the first time-domain unit has a different time-domain length from the second time-domain unit.

In summary, in the communication method according to the embodiments of the present disclosure, the first time-domain unit is used for the synchronization. A synchronization effect of the first time-domain unit improves reception quality of the third signal and ensures reception accuracy of information carried by the third signal. A first signal whose time-domain resource includes the first time-domain unit enables the second node to work within an accurate time-domain range and/or frequency-domain range as much as possible, such that the transmission quality of the second node is ensured, the interference between the second node and another device is avoided, and the overall transmission efficiency and communication quality of a communication system are improved.

In some embodiments, S2010 is implemented as S2110, as illustrated in FIG. 21. FIG. 21 is a schematic flowchart of a communication method according to some exemplary embodiments of the present disclosure. The communication method is performed by a second node illustrated in FIG. 20, and includes the following process.

**In S2110,** a first signal is received, wherein a time-domain resource of the first signal includes a first quantity of first time-domain units and a second quantity of second time-domain units, wherein the first time-domain units are used for synchronization at the second node, and a second signal is associated with a third signal, wherein the second signal is a signal of the first signal which locates in a first time-domain unit, and the third signal is a signal of the first signal which locates in a second time-domain unit.

The second node is a receiver of the first signal. In some embodiments, at least one second node is present. Exemplarily, in a downlink scenario, the receiver is a terminal device (for example, a terminal device illustrated in FIG. 1 or FIG. 2 or FIG. 3). In an uplink scenario, the receiver is a network device (for example, a network device illustrated in FIG. 1 or FIG. 3). In an SL scenario, the receiver is a second terminal device (for example, the terminal device illustrated in FIG. 1 or FIG. 2 or FIG. 3).

A first node is a transmitter of the first signal. In some embodiments, the first signal is transmitted in a unicast, multicast, or broadcast manner. Exemplarily, in the downlink scenario, the transmitter is a network device (for example, the network device illustrated in FIG. 1 or FIG. 3). In the uplink scenario, the transmitter is a terminal device (for example, the terminal device illustrated in FIG. 1 or FIG. 2 or FIG. 3). In the SL scenario, the transmitter is a first terminal device (for example, the terminal device illustrated in FIG. 1 or FIG. 2 or FIG. 3).

In some embodiments, the first signal is implemented as a WUR-Sync field and/or a WUR-Data field illustrated in FIG. 8.

For relevant content of the first time-domain unit and the second time-domain unit, reference may be made to S1010. Details are not described herein again.

Next, how the first time-domain unit is used for the synchronization is described:

**1. Synchronization based on a first time-domain unit**

In some embodiments, the second node performs time-frequency synchronization based on a first time-domain unit. It can also be understood as that the second node performs time-domain synchronization based on a second signal in the first time-domain unit.

In some embodiments, the second node performs envelope detection on the second signal in the first time-domain unit and at least part of a signal associated with the second signal, and performs the time-domain synchronization based on an envelope detection result. In some embodiments, the second node performs the envelope detection on the second signal in the first time-domain unit and the at least part of the signal associated with the second signal to acquire clock information, performs time-domain calibration on the first signal based on the acquired clock information, and receives and/or detects the first signal based on a calibrated time-domain resource.

In some embodiments, the second node performs correlation detection on the second signal in the first time-domain unit and the at least part of the signal associated with the second signal, and performs frequency-domain synchronization based on a correlation detection result. In some embodiments, the second node performs the correlation detection on the second signal in the first time-domain unit and the at least part of the signal associated with the second signal, compares sizes of correlation peaks (as mentioned in the "first synchronization mode" described earlier) or acquires a correlation angle (as mentioned in the "second synchronization mode" described earlier), performs frequency offset estimation and calibration on the first signal based on a comparison result of the sizes of the correlation peaks or a size of the correlation angle, and receives and/or detects the first signal based on a calibrated frequency-domain resource.

The at least part of the signal associated with the second signal is at least part of a signal that is in a third signal in a second time-domain unit associated with a first time-domain unit in which the second signal is located and that are used to determine the second signal.

Exemplarily, the time-domain resource of the first signal includes a plurality of first time-domain units and a plurality of second time-domain units. A second signal in any first time-domain unit and at least part of a signal associated with the second signal are used for the time-frequency synchronization.

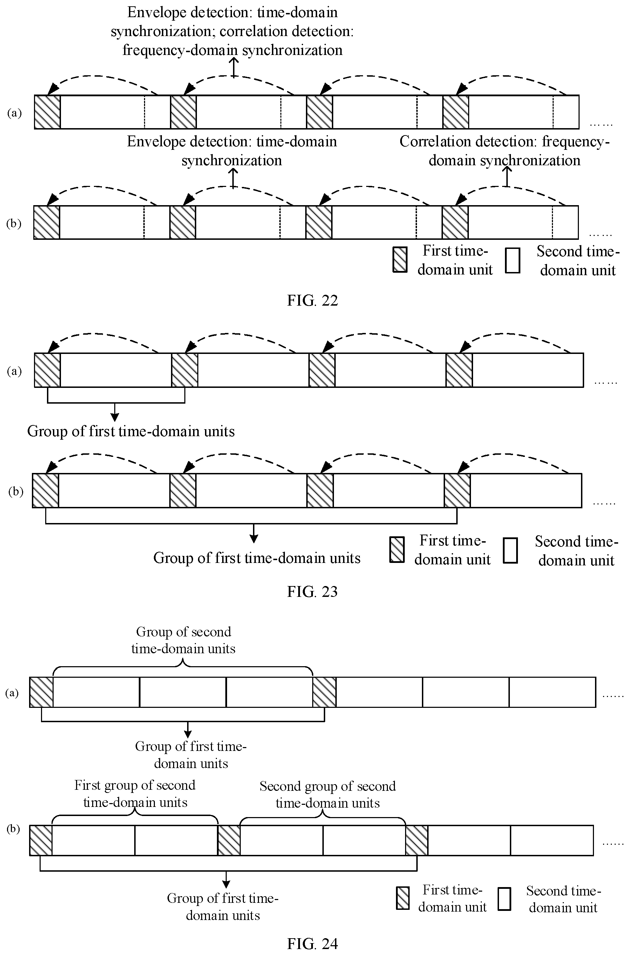

In some embodiments, first time-domain units used for the time-domain synchronization and the frequency-domain synchronization are the same or different. For example, as illustrated in FIG. 22(a), an envelope detection result and a correlation detection result are acquired based on a second signal in a first time-domain unit and at least part of a signal associated with the second signal, the envelope detection result is used for the time-domain synchronization, and the correlation detection result is used for the frequency-domain synchronization. For another example, as illustrated in FIG. 22(b), an envelope detection result is acquired based on a second signal in a first time-domain unit and at least part of a signal associated with the second signal, and the envelope detection result is used for the time-domain synchronization; and a correlation detection result is acquired based on a second signal in another first time-domain unit and at least part of the signal associated with the second signal, and the correlation detection result is used for the frequency-domain synchronization.

## 2. Synchronization based on a plurality of first time-domain units

In some embodiments, the second node performs time-frequency synchronization based on the plurality of first time-domain units. It can also be understood as that the second node performs time-domain synchronization based on a plurality of second signals, and the plurality of second signals are signals of the first signal which locate in the plurality of first time-domain units.

In some embodiments, the plurality of first time-domain units are organized into a group of first time-domain units, or are organized into a plurality of groups of first time-domain units. That is, it is considered that the second node performs the synchronization based on the group of first time-domain units or the plurality of groups of first time-domain units.

Next, the synchronization is described based on a concept of a group of first time-domain units:

Firstly, design of the group of first time-domain units is described.

In some embodiments, the group of first time-domain units includes at least two first time-domain units. A second time-domain unit or a plurality of second time-domain units is or are present between the at least two first time-domain units.

Exemplarily, as illustrated in FIG. 23(a), the time-domain resource of the first signal includes a plurality of first time-domain units and a plurality of second time-domain units, each first time-domain unit is located before an associated second time-domain unit, and a second time-domain unit is present between at least two first time-domain units in the group of first time-domain units.

Exemplarily, as illustrated in FIG. 23(b), the time-domain resource of the first signal includes a plurality of first time-domain units and a plurality of second time-domain units, each first time-domain unit is located before an associated second time-domain unit, and a plurality of second time-domain units are present between at least two first time-domain units in the group of first time-domain units.

Exemplarily, as illustrated in FIG. 24(a), the time-domain resource of the first signal includes a plurality of first time-domain units and a plurality of second time-domain units, each first time-domain unit is located before groups of associated second time-domain units, and a plurality of second time-domain units are present between at least two first time-domain units in the group of first time-domain units. The plurality of second time-domain units belong to a same group of second time-domain units.

Exemplarily, as illustrated in FIG. 24(b), the time-domain resource of the first signal includes a plurality of first time-domain units and a plurality of second time-domain units, each first time-domain unit is located before groups of associated second time-domain units, and a plurality of second time-domain units are present between at least two first time-domain units in the group of first time-domain units. The plurality of second time-domain units belong to different groups of second time-domain units, for example, the plurality of second time-domain units include second time-domain units in a first group of second time-domain units and a second group of second time-domain units.

FIG. 23 and FIG. 24 may also be understood as that a time-domain interval between the at least two first time-domain units is designed. In some embodiments, the time-domain interval between the at least two first time-domain units in the group of first time-domain units is relatively short, which is, for example, demonstrated by a small quantity of second time-domain units, and/or demonstrated by a short-duration second time-domain unit. In some embodiments, the time-domain interval between the at least two first time-domain units in the group of first time-domain units is relatively long, which is, for example, demonstrated by a large quantity of second time-domain units, and/or demonstrated by a long-duration second time-domain unit.

In some embodiments, the at least two first time-domain units in the group of first time-domain units are periodically distributed in the time domain, that is, the time-domain interval between the at least two first time-domain units in the group of first time-domain units is fixed. Alternatively, the at least two first time-domain units in the group of first time-domain units are aperiodically distributed in the time domain.

In some embodiments, a quantity of first time-domain units in the group of first time-domain units is defined by a network protocol, or configured by the network device, or determined by the terminal device, or negotiated by the network device and the terminal device.

In some embodiments, a time-domain interval between the first time-domain units in the group of first time-domain units is defined by the network protocol, or configured by the network device, or determined by the terminal device, or negotiated by the network device and the terminal device.

Secondly, design of the plurality of groups of first time-domain units is described:

For each of the plurality of groups of first time-domain units, reference may be made to the design in FIG. 23 and FIG. 24. In some embodiments, quantities of first time-domain units in different groups of first time-domain units are the same or different. In some embodiments, quantities of second time-domain units between the first time-domain units in the different groups of first time-domain units are the same or different. In some embodiments, time-domain intervals between the first time-domain units in the different groups of first time-domain units are the same or different.

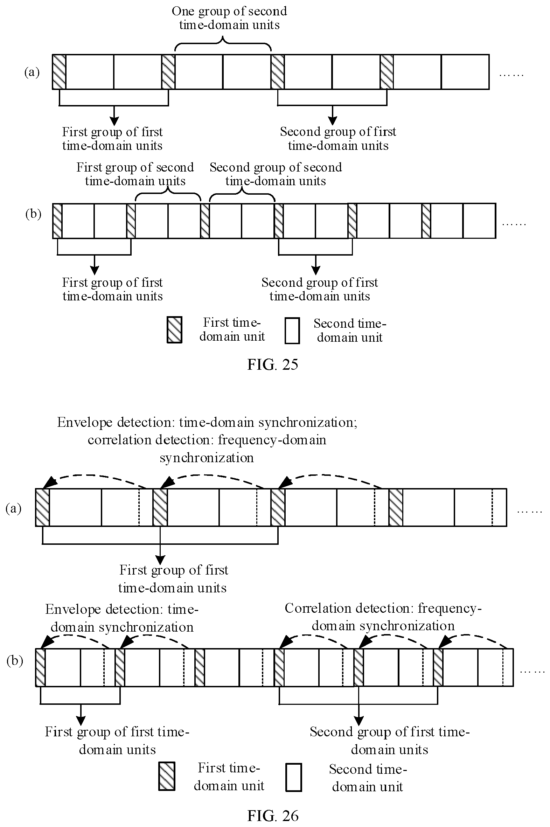

Exemplarily, as illustrated in FIG. 25, the time-domain resource of the first signal includes a plurality of first time-domain units and a plurality of second time-domain units. First signals in p groups of first time-domain units and at least part of signals associated with the first signals are used for the time-frequency synchronization.

In some embodiments, a group of second time-domain units is present between every two groups of first time-domain units in the p groups of first time-domain units, that is, no first time-domain unit is present between two adjacent groups of first time-domain units, as illustrated in FIG. 25(a). Alternatively, a plurality of groups of second time-domain units are present between different groups of first time-domain units in the p groups of first time-domain units, as illustrated in FIG. 25(b).

FIG. 25 may also be understood as that a time-domain interval between at least two groups of first time-domain units is designed. In some embodiments, the time-domain interval between at least two groups of first time-domain units in the p groups of first time-domain units is relatively short, which is, for example, demonstrated by a small quantity of second time-domain units, and/or demonstrated by a short-duration second time-domain unit. In some embodiments, the time-domain interval between the at least two groups of first time-domain units in the p groups of first time-domain units is relatively long, which is, for example, demonstrated by a large quantity of second time-domain units, and/or by a long-duration second time-domain unit.

In some embodiments, the plurality of groups of first time-domain units are periodically distributed in the time domain, that is, a time-domain interval between the groups of first time-domain units is fixed. Alternatively, the plurality of groups of first time-domain units are aperiodically distributed in the time domain.

In some embodiments, a quantity of groups of first time-domain units may be defined by the network protocol, or configured by the network device, or determined by the terminal device, or negotiated by the network device and the terminal device.

In some embodiments, the time-domain interval between the groups of first time-domain units may be defined by the network protocol, or configured by the network device, or determined by the terminal device, or negotiated by the network device and the terminal device.

Then, synchronization based on the group of first time-domain units is described:

In some embodiments, the second node performs the time-frequency synchronization based on the p groups of first time-domain units. p is an integer greater than or equal to 1. It can also be understood as that the second node performs the time-domain synchronization based on p groups of second signals. The p groups of second signals include signals of the first signal which locate in the p groups of first time-domain units.

In some embodiments, the second node performs envelope detection on the p groups of second signals and at least part of signals associated with the p groups of second signals, and performs the time-domain synchronization based on an envelope detection result. In some embodiments, the second node performs the envelope detection on the p groups of second signals and the at least part of signals associated with the p groups of second signals to acquire clock information, performs time-domain calibration on the first signal based on the acquired clock information, and receives and/or detects the first signal based on a calibrated time-domain resource.

In some embodiments, the second node performs correlation detection on the p groups of second signals and the at least part of signals associated with the p groups of second signals, and performs the frequency-domain synchronization based on a correlation detection result. In some embodiments, the second node performs the correlation detection on the p groups of second signals and the at least part of signals associated with the p groups of second signals, compares sizes of correlation peaks (as mentioned in the "first synchronization mode" described earlier) or acquires a correlation angle (as mentioned in the "second synchronization mode" described earlier), performs frequency offset estimation and calibration on the first signal based on a comparison result of the sizes of the correlation peaks or a size of the correlation angle, and receives and/or detects the first signal based on a calibrated frequency-domain resource.

The at least part of signals associated with the p groups of second signals are at least part of signals that are in third signals in second time-domain units respectively associated with the p groups of first time-domain units in which the p groups of second signals are located and that are used to determine the second signals.

In some embodiments, groups of first time-domain units used for the time-domain synchronization and the frequency-domain synchronization are the same. For example, as illustrated in FIG. 26(a), an envelope detection result and a correlation detection result are acquired based on first signals in two groups of first time-domain units and at least part of signals associated with the first signals. The envelope detection result is used for the time-domain synchronization, and the correlation detection result is used for the frequency-domain synchronization.

In some embodiments, groups of first time-domain units used for the time-domain synchronization and the frequency-domain synchronization are different. In some embodiments, the groups of first time-domain units used for the time-domain synchronization and the frequency-domain synchronization are different in quantities, that is, a quantity of groups of first time-domain units used for the time-domain synchronization is not equal to a quantity of groups of first time-domain units used for the frequency-domain synchronization. In some embodiments, the groups of first time-domain units used for the time-domain synchronization and the frequency-domain synchronization are different in time-domain positions, that is, time-domain positions of the group of first time-domain units used for the time-domain synchronization do not completely overlap with time-domain positions of the group of first time-domain units used for the frequency-domain synchronization. In some embodiments, the groups of first time-domain units used for the time-domain synchronization and the frequency-domain synchronization are different both in quantities and in time-domain positions. For example, as illustrated in FIG. 26(b), an envelope detection result is acquired based on first signals in two groups of first time-domain units and at least part of signals associated with the first signals, and the envelope detection result is used for the time-domain synchronization; and a correlation detection result is acquired based on first signals in three groups of first time-domain units and at least part of signals associated with the first signals, and the correlation detection result is used for the frequency-domain synchronization. Time-domain positions of the two groups of first time-domain units may or may not overlap with time-domain positions of the three groups of first time-domain units. FIG. 26(b) shows an example in which the time-domain positions of the two groups of first time-domain units do not overlap with the time-domain positions of the three groups of first time-domain units.

In some embodiments, in addition to the first quantity of first time-domain units and the second quantity of second time-domain units, the time-domain resource of the first signal further includes a third quantity of third time-domain units and a fourth quantity of fourth time-domain units. The third quantity of third time-domain units are used for synchronization at the second node. A fourth signal is associated with a fifth signal, the fourth signal is a signal of the first signal which locates in a third time-domain unit, and the fifth signal is a signal of the first signal which locates in a fourth time-domain unit.

For relevant content of the third time-domain unit and the fourth time-domain unit, reference may be made to S1010. Details are not described herein again.

<u>Next, how the third time-domain unit is used for the synchronization is described:</u>

## 1. Synchronization based on a third time-domain unit

In some embodiments, the second node performs the time-frequency synchronization based on the third time-domain unit. It can also be understood that as the second node performs the time-domain synchronization based on a fourth signal in the third time-domain unit.

In some embodiments, the second node performs envelope detection on the fourth signal in the third time-domain unit and at least part of the signal associated with the fourth signal, and performs the time-domain synchronization based on an envelope detection result. In some embodiments, the second node performs the envelope detection on the fourth signal in the third time-domain unit and the at least part of the signal associated with the fourth signal to acquire clock information, performs time-domain calibration based on the acquired clock information, and receives and/or detects a signal subsequent to the third time-domain unit based on a calibrated time-domain resource.

In some embodiments, the second node performs correlation detection on the fourth signal in the third time-domain unit and the at least part of the signal associated with the fourth signal, and performs the frequency-domain synchronization based on a correlation detection result. In some embodiments, the second node performs the correlation detection on the fourth signal in the third time-domain unit and the at least part of the signal associated with the fourth signal, compares sizes of correlation peaks (as mentioned in the "first synchronization mode" described earlier) or acquires a correlation angle (as mentioned in the "second synchronization mode" described earlier), performs frequency offset estimation and calibration based on a comparison result of the sizes of the correlation peaks or a size of the correlation angle, and receives and/or detects the signal subsequent to the third time-domain unit based on a calibrated frequency-domain resource.

The at least part of the signal associated with the fourth signal are at least part of a signal in a fifth signal in a fourth time-domain unit associated with a third time-domain unit in which the fourth signal is located and that are used to determine the fourth signal.

Exemplarily, in addition to the plurality of first time-domain units and the plurality of second time-domain units, the time-domain resource of the first signal further includes a plurality of third time-domain units and a plurality of fourth time-domain units. A fourth signal in any third time-domain unit and at least part of a signal associated with the fourth signal are used for the time-frequency synchronization.

In some embodiments, third time-domain units used for the time-domain synchronization and the frequency-domain synchronization are the same or different. For example, an envelope detection result and a correlation detection result are acquired based on a fourth signal in a third time-domain unit and at least part of a signal associated with the fourth signal, the envelope detection result is used for the time-domain synchronization, and the correlation detection result is used for the frequency-domain synchronization. For another example, an envelope detection result is acquired based on a fourth signal in a third time-domain unit and at least part of a signal associated with the fourth signal, and the envelope detection result is used for the time-domain synchronization; and a correlation detection result is acquired based on a fourth signal in another third time-domain unit and at least part of a signal associated with the fourth signal, and the correlation detection result is used for the frequency-domain synchronization.

**2. Synchronization based on a plurality of third time-domain units**

In some embodiments, the second node performs the time-frequency synchronization based on the plurality of third time-domain units. It can also be understood as that the second node performs the time-domain synchronization based on a plurality of fourth signals, and the plurality of fourth signals are signals of the first signal which locate in the plurality of third time-domain units.

In some embodiments, the plurality of third time-domain units are organized into a group of third time-domain units, or are organized into a plurality of groups of third time-domain units. That is, it is considered that the second node performs the synchronization based on the group of third time-domain units or the plurality of groups of third time-domain units.

Next, the synchronization is described based on a concept of a group of third time-domain units:

Firstly, design of the group of third time-domain units is described:

In some embodiments, the group of third time-domain units includes at least two third time-domain units. A fourth time-domain unit or a plurality of fourth time-domain units is or are present between the at least two third time-domain units. For specific examples, reference may be made to FIG. 23 and FIG. 24.

In some embodiments, a time-domain interval between the at least two third time-domain units in the group of third time-domain units is relatively short, for example, a small quantity of fourth time-domain units are present between the at least two third time-domain units, and/or a short-duration fourth time-domain unit is present between the at least two third time-domain units.

In some embodiments, the time-domain interval between the at least two first time-domain units in the group of first time-domain units is relatively long, for example, a large quantity of fourth time-domain units are present between the at least two third time-domain units, and/or a long-duration fourth time-domain unit is present between the at least two third time-domain units.

In some embodiments, the at least two third time-domain units in the group of third time-domain units are periodically distributed in the time domain, that is, the time-domain interval between the at least two third time-domain units in the group of third time-domain units is fixed. Alternatively, the at least two third time-domain units in the group of third time-domain units are aperiodically distributed in the time domain.

In some embodiments, a quantity of third time-domain units in the group of third time-domain units is defined by the network protocol, or configured by the network device, or determined by the terminal device, or negotiated by the network device and the terminal device.

In some embodiments, a time-domain interval between the third time-domain units in the group of third time-domain units is defined by the network protocol, or configured by the network device, or determined by the terminal device, or negotiated by the network device and the terminal device.

Secondly, design of the plurality of groups of third time-domain units is described:

For each of the plurality of groups of third time-domain units, reference may be made to the design in FIG. 23 and FIG. 24. In some embodiments, quantities of third time-domain units in different groups of third time-domain units are the same or different. In some embodiments, quantities of fourth time-domain units between the third time-domain units in the different groups of third time-domain units are the same or different. In some embodiments, time-domain intervals between the third time-domain units in the different groups of third time-domain units are the same or different.

In some embodiments, in addition to the plurality of first time-domain units and the plurality of second time-domain units, the time-domain resource of the first signal further includes a plurality of third time-domain units and a plurality of fourth time-domain units. Fourth signals in q groups of third time-domain units and at least part of signals associated with the fourth signals are used for the time-frequency synchronization.

In some embodiments, a fourth time-domain unit is present between every two groups of third time-domain units in the q groups of third time-domain units. Alternatively, a plurality of fourth time-domain units are present between different groups of third time-domain units in the q groups of third time-domain units.

In some embodiments, a time-domain interval between at least two groups of third time-domain units in the q groups of third time-domain units is relatively short, for example, a small quantity of fourth time-domain units are present between the at least two groups of third time-domain units, and/or a short-duration fourth time-domain unit is present between the at least two groups of third time-domain units. In some embodiments, the time-domain interval between the at least two groups of third time-domain units in the q groups of third time-domain units is relatively long, for example, a large quantity of fourth time-domain units are present between the at least two groups of third time-domain units, and/or a long-duration fourth time-domain unit is present between the at least two groups of third time-domain units.

In some embodiments, the plurality of groups of third time-domain units are periodically distributed in the time domain, that is, a time-domain interval between the groups of third time-domain units is fixed. Alternatively, the plurality of groups of third time-domain units are aperiodically distributed in the time domain.

In some embodiments, a quantity of groups of third time-domain units is defined by the network protocol, or configured by the network device, or determined by the terminal device, or negotiated by the network device and the terminal device.

In some embodiments, the time-domain interval between the groups of third time-domain units is defined by the network protocol, or configured by the network device, or determined by the terminal device, or negotiated by the network device and the terminal device.

Then, the synchronization based on the group of third time-domain units is described:

In some embodiments, the second node performs the time-frequency synchronization based on the q groups of third time-domain units. q is an integer greater than or equal to 1. It can also be understood as that the second node performs the time-domain synchronization based on q groups of fourth signals. The q groups of fourth signals include signals of the first signal which locate in the q groups of third time-domain units.

In some embodiments, the second node performs envelope detection on the q groups of fourth signals and at least part of signals associated with the q groups of fourth signals, and performs the time-domain synchronization based on an envelope detection result. In some embodiments, the second node performs the envelope detection on the q groups of fourth signals and the at least part of signals associated with the q groups of fourth signals to acquire clock information, performs time-domain calibration on the first signal based on the acquired clock information, and receives and/or detects the first signal based on a calibrated time-domain resource.

In some embodiments, the second node performs correlation detection on the q groups of fourth signals and the at least part of signals associated with the q groups of fourth signals, and performs the frequency-domain synchronization based on a correlation detection result. In some embodiments, the second node performs the correlation detection on the q groups of fourth signals and the at least part of signals associated with the q groups of fourth signals, compares sizes of correlation peaks (as mentioned in the "first synchronization mode" described earlier) or acquires a correlation angle (as mentioned in the "second synchronization mode" described earlier), performs frequency offset estimation and calibration on the first signal based on a comparison result of the sizes of the correlation peaks or a size of the correlation angle, and receives and/or detects the first signal based on a calibrated frequency-domain resource.

The at least part of signals associated with the q groups of fourth signals are at least part of signals that are in fifth signals in fourth time-domain units respectively associated with the q groups of third time-domain units in which the q groups of fourth signals are located and that are configured to determine the fourth signals.

In some embodiments, groups of third time-domain units used for the time-domain synchronization and the frequency-domain synchronization are the same.

In some embodiments, groups of third time-domain units used for the time-domain synchronization and the frequency-domain synchronization are different. In some embodiments, the groups of third time-domain units used for the time-domain synchronization and the frequency-domain synchronization are different in quantities, that is, a quantity of groups of third time-domain units used for the time-domain synchronization is not equal to a quantity of groups of third time-domain units used for the frequency-domain synchronization. In some embodiments, the groups of third time-domain units used for the time-domain synchronization and the frequency-domain synchronization are different in time-domain positions, that is, time-domain positions of the group of third time-domain units used for the time-domain synchronization do not completely overlap with time-domain positions of the group of third time-domain units used for the frequency-domain synchronization. In some embodiments, the groups of third time-domain units used for the time-domain synchronization and the frequency-domain synchronization are different both in quantities and in time-domain positions.

It should be noted that the first time-domain unit is used for synchronization before receiving and/or detecting the first signal, and the third time-domain unit is used for synchronization both before receiving and/or detecting the first signal and in a process of receiving and/or detecting the first signal. That is, before receiving and/or detecting the first signal, the second node may use the first time-domain unit and/or the third time-domain unit to perform time-domain and frequency-domain calibration to the ensure overall reception quality of the first signal. In the process of receiving and/or detecting the first signal, the second node may also use the third time-domain unit to perform the time-domain and frequency-domain calibration.

If the first signal experiences a time offset and a frequency offset in the reception process, time offset calibration and frequency offset calibration are performed in stages in the reception process through one or more third time-domain units. This avoids a "snowballing" effect that the generated time offset and frequency offset in the reception process become increasingly severe, prevents significant differences in the reception quality of the first signal at different time-domain positions, and ensures reception quality of each part of the first signal. Especially for a device using a simple oscillator, or in a case in which many time-domain resources are occupied by received signals/data, the third time-domain unit ensures synchronization performance of the signals/data during reception and improves transmission quality of the signals/data.

In summary, in the communication method according to the embodiments of the present disclosure, the first time-domain unit is used for the synchronization. A synchronization effect of the first time-domain unit improves reception quality of the third signal and ensures reception accuracy of information carried by the third signal. In addition, a first signal whose time-domain resource includes the first time-domain unit enables the second node to work within an accurate time-domain range and/or frequency-domain range as much as possible, such that the transmission quality of the second node is ensured, the interference between the second node and another device is avoided, and the overall transmission efficiency and communication quality of a communication system are improved. Moreover, the third time-domain unit is also used for the synchronization. A synchronization effect of the third time-domain unit improves reception quality of the fifth signal and ensures reception accuracy of information carried by the fifth signal. The fourth signal and the fifth signal serve as reference signals in a process of receiving the first signal, such that the reception accuracy of the information carried by the third signal is ensured. A first signal whose time-domain resource includes the third time-domain unit and the fourth time-domain unit further enables the second node to further perform time-frequency synchronization in the process of receiving the first signal, such that a time/frequency-domain calibration degree of the first signal in the reception process is ensured, and an impact on reception quality of the first signal due to continuous time/frequency-domain deviation of the first signal in the reception process is avoided. The first time-domain unit and the third time-domain unit improve synchronization performance, and enhances transmission quality and efficiency of the first signal. In addition, a variety of configuration schemes for the first time-domain unit, the second time-domain unit, the third time-domain unit, and the fourth time-domain unit are provided to satisfy synchronization requirements in various communication scenarios.

**Encoding method of the first signal:**

As described above, in some embodiments, a signal of the first signal in the second time-domain unit is formed based on a first sequence group, the first sequence group is acquired by encoding first information, and each bit corresponding to the first information corresponds to at least one first sequence element and at least one second sequence element. Therefore, a bit of the first information corresponds to at least two second time-domain units, and third signals in the at least two second time-domain units are different. Therefore, it is regarded that second signals in the at least two second time-domain units are acquired by encoding a same bit of the first information.

Exemplarily, the first information includes at least one of data information, control information, configuration information, synchronization information, or indication information.

In the embodiments of the present disclosure, the first signal is encoded using an encoding method illustrated in FIG. 7, such that each bit of the first information corresponds to the at least one first sequence element and the at least one second sequence element. For example, each bit of the first information corresponds to a first sequence element and a second sequence element, or each bit of the first information corresponds to x first sequence elements and y second sequence elements. x is an integer greater than 1, and y is an integer greater than 1. Values of x and y may be equal or unequal.

In the embodiments of the present disclosure, for example, the first sequence element takes a value of "1", the second sequence element takes a value of "0", and each bit of the first information corresponds to a first sequence element with a value of "1" and a second sequence element with a value of "0".

In the embodiments of the present disclosure, the first signal may be modulated through one or more of OFDM modulation, QPSK modulation, ASK modulation, FSK modulation, OOK modulation, MC-OOK modulation, and QAM modulation. The exemplary description is given using an example in which the first signal is modulated through the OOK modulation.

It is assumed that a bit sequence of the first information is "101...". After encoding, a first bit B0 corresponds to a first sequence element with a value of "1" and a second sequence element with a value of "0". After modulation, the first sequence element with the value of "1" and the second sequence element with the value of "0" exhibit different waveforms. That is, a third signal corresponding to the first sequence element with the value of "1" is different from a third signal corresponding to the second sequence element with the value of "0". Similarly, after encoding, a second bit B1 corresponds to a second sequence element with a value of "0" and a first sequence element with a value of "1", and a third bit B2 corresponds to a first sequence element with a value of "1" and a second sequence element with a value of "0".

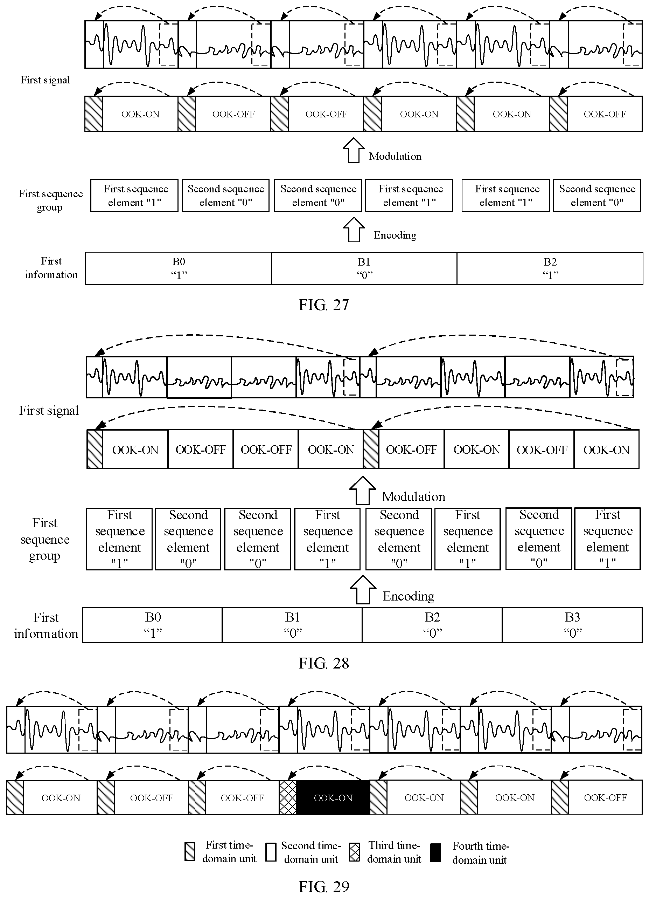

Taking an example in which the first sequence element with the value of "1" corresponds to an OOK-ON symbol and the second sequence element with the value of "0" corresponds to an OOK-OFF symbol, FIG. 27 schematically shows encoding in a case where each first time-domain unit is located before the associated second time-domain unit, and FIG. 28 schematically shows encoding in a case where each first time-domain unit is located before the group of associated second time-domain units. Every two second time-domain units correspond to a same bit of the first information.

As described above, in some embodiments, in addition to the first quantity of first time-domain units and the second quantity of second time-domain units, the time-domain resource of the first signal further includes the third quantity of third time-domain units and the fourth quantity of fourth time-domain units.

In some embodiments, signals of the first signal which locate in the fourth quantity of fourth time-domain units are associated with signals of the first signal which locate in the second quantity of second time-domain units, or are associated with part of signals of the first signal which locate in the second quantity of second time-domain units. It can also be understood as that the signals of the first signal which locate in the fourth quantity of fourth time-domain units are determined based on the signals of the first signal which locate in the second quantity of second time-domain units, or are determined based on the part of signals of the first signal which locate in the second quantity of second time-domain units.

In some embodiments, the signals of the first signal which locate in the fourth quantity of fourth time-domain units are formed based on a second sequence group, and the second sequence group includes at least one first sequence element.

The first sequence element takes a first value.

Referring to FIG. 27 and FIG. 28, in a case where the first sequence element with a value of "1" corresponds to the OOK-ON symbol, and each third time-domain unit is located before an associated fourth time-domain unit, each fourth time-domain unit corresponds to an OOK-ON symbol.

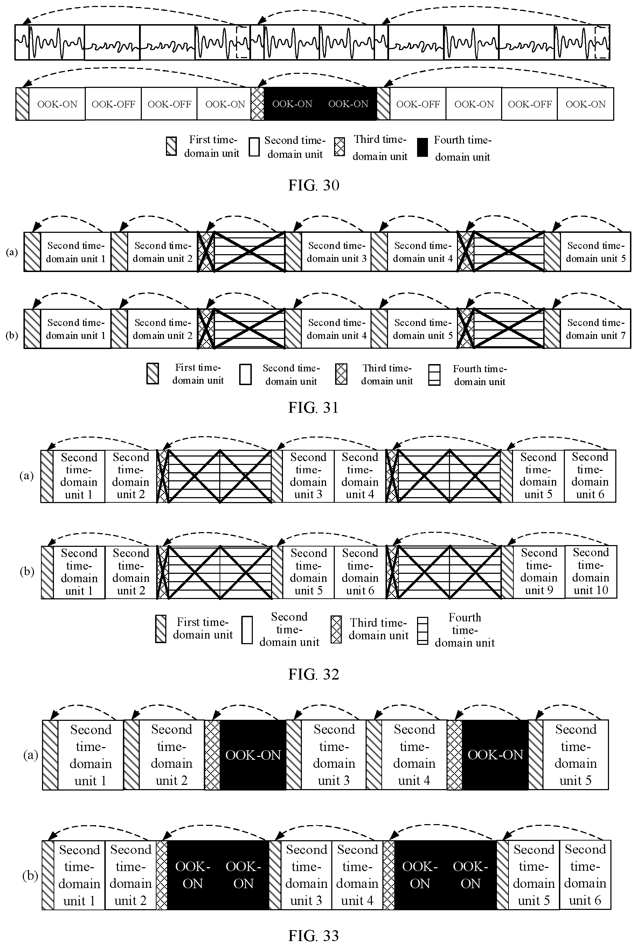

Taking an example in which the first sequence element takes a value of "1", the second sequence element takes a value of "0", and each bit of the first information corresponds to a first sequence element with a value of "1" and a second sequence element with a value of "0", FIG. 29 schematically shows, based on FIG. 27, the first signal in a case where each third time-domain unit is located before the associated fourth time-domain unit, and FIG. 30 schematically shows, based on FIG. 28, the first signal in a case where each third time-domain unit is located before a group of associated fourth time-domain units.

The above content about the encoding method may be flexibly combined with the first signal mentioned in the embodiments of S910, S1010, S2010, and S2110. Alternatively, the above content about the encoding method may be applicable to the first signal involved in S910, S1010, S2010, and S2110.

**Design of a periodic distribution of the fourth time-domain unit:**

As described above, in some embodiments, the fourth quantity of fourth time-domain units are periodically distributed in the time-domain resource of the first signal, or the fourth quantity of fourth time-domain units are aperiodically distributed in the time-domain resource of the first signal.

The following first describes the design of the periodic distribution of the fourth time-domain unit in a case where each first time-domain unit is located before the associated second time-domain unit:

**1. In one** case, as illustrated in FIG. 18 or FIG. 19, the data, the synchronization information, and the indication information are not transmitted at the third time-domain unit and the fourth time-domain unit.

It can also be understood as that the third time-domain unit and the fourth time-domain unit are punctured. Therefore, as illustrated in FIG. 31 or FIG. 32, the fourth time-domain unit is periodically punctured.

FIG. 31 shows a schematic diagram of puncturing in a case where each third time-domain unit is located before the associated fourth time-domain unit. FIG. 31(a) illustrates a case in which two second time-domain units correspond to two adjacent sequence elements in the first sequence group, that is, transmission of the data, the synchronization information, the indication information, and the like is delayed after the puncturing. FIG. 31(b) illustrates a case in which two second time-domain units correspond to two non-adjacent sequence elements in the first sequence group, that is, the transmission of the data, the synchronization information, the indication information, and the like is not delayed after the puncturing.

FIG. 32 shows a schematic diagram of puncturing in a case where each third time-domain unit is located before the group of associated fourth time-domain units. FIG. 32(a) illustrates a case in which two second time-domain units correspond to two adjacent sequence elements in the first sequence group, that is, the transmission of the data, the synchronization information, the indication information, and the like is delayed after the puncturing. FIG. 32(b) illustrates a case in which two second time-domain units correspond to two non-adjacent sequence elements in the first sequence group, that is, the transmission of the data, the synchronization information, the indication information, and the like is not delayed after the puncturing.

**2. In another case,** as illustrated in FIG. 29 or FIG. 30, same information is transmitted in each fourth time-domain unit.

It can also be understood as that in the time-domain resource composed of the first time-domain unit and the second time-domain unit, the third time-domain unit and the fourth time-domain unit are periodically inserted.

For example, in a case where the first sequence element corresponds to the OOK-ON symbol, as illustrated in FIG. 33, the fourth time-domain unit is periodically implemented as the OOK-ON symbol. FIG. 33(a) illustrates a case in which each third time-domain unit is located before the associated fourth time-domain unit. FIG. 33(b) illustrates a case in which each third time-domain unit is located before the group of associated fourth time-domain units.

The fourth time-domain unit is periodically implemented as the OOK-ON symbol using at least the following two methods:

Method 1: replacing an encoded bit

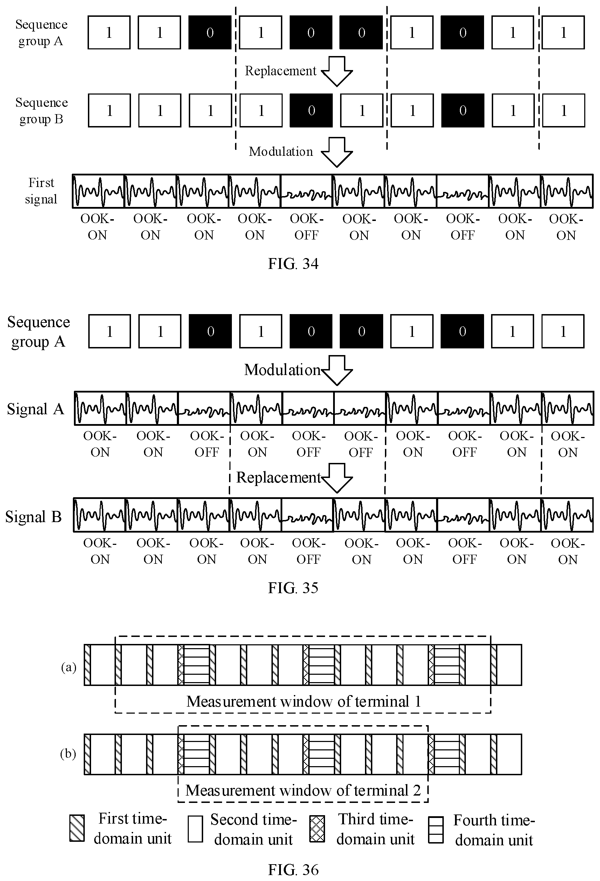

In a case where the first information is encoded to acquire the first sequence group, a sequence element in the first sequence group is periodically replaced with the first sequence element. As illustrated in FIG. 34, after the encoding, a resulting sequence group A is "1101001011". Assuming that a cycle is 3 sequence elements, a sequence group B "1111011011" is acquired by periodically replacing the sequence element. The sequence group B acquired through the replacement is modulated. For example, the sequence group B is input into a waveform generator to acquire the first signal.

Method 2: replacing a modulated signal

In a case where the first information is encoded to acquire the first sequence group, the first sequence group is modulated to acquire a signal A, and a signal of the signal A in the second time-domain unit is periodically replaced with a signal corresponding to the first sequence element. As illustrated in FIG. 35, after the encoding, a resulting sequence group A is "1101001011". After the modulation, the signal A is acquired. Assuming that a cycle is 3 second time-domain units, a signal B is acquired by periodically replacing the signal in the second time-domain unit with an OOK-ON signal. For example, during the modulation, the signal B is acquired by periodically performing state switching in a waveform generator, or by periodically replacing an OOK signal in the modulated signal A.

In some embodiments, after the fourth time-domain unit is periodically implemented as the OOK-ON symbol using the above method 1 or method 2, when the second node decodes the first signal, an impact of the fourth time-domain unit needs to be eliminated to accurately interpret the first information. It can also be understood as that when performing decoding, the second node needs to restore the replaced first signal to the first information.

As described above, the signal of the first signal in the second time-domain unit is formed based on the first sequence group, the first sequence group is acquired by encoding the first information, and each bit corresponding to the first information corresponds to the at least one first sequence element and the at least one second sequence element. Therefore, the bit of the first information corresponds to the at least two second time-domain units, and the third signals in the at least two second time-domain units are different. Therefore, it is regarded that the second signals in the at least two second time-domain units are acquired by encoding the same bit of the first information.

It is assumed that the bit of the first information is encoded to correspond to two sequence elements. The two sequence elements are respectively mapped onto two OKK symbols upon modulation. That is, the bit of the first information corresponds to the two different OKK symbols. One is an OKK-ON symbol and the other is an OKK-OFF symbol, as illustrated in FIG. 27 or FIG. 28.

In some embodiments, a position of the fourth time-domain unit is indicated by the network device to the terminal device, or defined by the communication protocol, or negotiated by the network device and the terminal device. Therefore, the position of the fourth time-domain unit is known for both the first node and the second node.

As illustrated in FIG. 34 or FIG. 35, the first signal received by the second node is presented as an OOK-ON symbol in both the third time-domain unit and the fourth time-domain unit. The second node has known that the third time-domain unit is replaced with the fourth time-domain unit. That is, the second node has known that a signal in the third time-domain unit has been "replaced".

Since a signal in the fourth time-domain unit is not "replaced", the OOK-ON symbol corresponding to the fourth time-domain unit is consistent with the first information. Moreover, since the third time-domain unit and the fourth time-domain unit correspond to the same bit in the first information, OOK symbols in the third time-domain unit and the fourth time-domain unit are different. Therefore, the second node decodes the OOK symbol in the third time-domain unit into bit information corresponding to the OOK-OFF symbol based on the OOK-ON symbol in the fourth time-domain unit.

Simply, signals received by the second node in the third time-domain unit and the fourth time-domain unit are presented as [OOK-ON OOK-ON]. However, the second node eliminates the impact of the fourth time-domain unit and decodes the [OOK-ON OOK-ON] into bit information corresponding to the IOOK-OFF OOK-ON].

The above content about the design of the periodic design of the fourth time-domain unit may be flexibly combined with the first signal mentioned in the embodiments of S910, S1010, S2010, and S2110. Alternatively, the above content about the design of the periodic design of the fourth time-domain unit may be applicable to the first signal involved in S910, S1010, S2010, and S2110.

The periodic distribution of the fourth time-domain units causes the first signal to be periodically and synchronously affected by the third time-domain unit and the fourth time-domain unit in the reception process. In this way, the time-frequency offset in the reception process of the first signal is periodically corrected, thereby ensuring the overall reception quality of the first signal and the reception accuracy of the information carried by the third signal.

**Design of the first signal for terminal devices with different capabilities:**

As described above, in some embodiments, at least one of the following items corresponding to the first sequence group is associated with a capability of the terminal device:

- a quantity of first sequence elements;
- a quantity of second sequence elements;
- a quantity of second sequence elements between two first sequence elements; or
- a quantity of first sequence elements between two second sequence elements.

In some embodiments, a length of the first time-domain unit and/or a length of the second time-domain unit are associated with the capability of the terminal device.

In some embodiments, the quantity of first time-domain units and/or the quantity of second time-domain units are associated with the capability of the terminal device. That is, the first quantity and/or the second quantity are associated with the capability of the terminal device.

In some embodiments, a length of the third time-domain unit and/or a length of the fourth time-domain unit are associated with the capability of the terminal device.

In some embodiments, the quantity of third time-domain units and/or the quantity of fourth time-domain units are associated with the capability of the terminal device. That is, the third quantity and/or the fourth quantity are associated with the capability of the terminal device.

In some embodiments, a stronger capability of the terminal device leads to more sequence elements in the first sequence group supported by the terminal device, and/or more first time-domain units supported by the terminal device, and/or more second time-domain units supported by the terminal device, and/or more third time-domain units supported by the terminal device, and/or more fourth time-domain units supported by the terminal device, and/or longer duration of the first signal, and/or longer duration of the first time-domain unit, and/or longer duration of the second time-domain unit, and/or longer duration of the third time-domain unit, and/or longer duration of the fourth time-domain unit. Therefore, synchronization accuracy is improved, and the transmission quality of the first signal is enhanced.

In some embodiments, the terminal devices with different capabilities receive or transmit different first signals. The different first signals are different in one or more of the following aspects: the quantity of first sequence elements, the quantity of second sequence elements, the quantity of second sequence elements between the two first sequence elements, the quantity of first sequence elements between the two second sequence elements, the quantity of first time-domain units, the quantity of second time-domain units, the quantity of third time-domain units, the quantity of fourth time-domain units, duration of the first signal, duration of the first time-domain unit, duration of the second time-domain unit, duration of the third time-domain unit, and duration of the fourth time-domain unit.

The capability of the terminal device includes a capability of the terminal device for performing the synchronization. The capability of the terminal device for performing the synchronization may be understood as a capability of the terminal device for performing the time offset calibration and/or the frequency offset estimation and/or the frequency offset calibration. Exemplarily, the capability of the terminal device for performing the synchronization includes a measurement window size or a quantity of detected time-domain units that is supported by the terminal device. The measurement window size may also be referred to as a detection window size.

Exemplarily, FIG. 36 shows designs for the first signal that are supported by two terminal devices with different capabilities. For example, each first time-domain unit is located before the associated second time-domain unit, the first time-domain unit is a GI before the second time-domain unit, the second time-domain unit is an OOK symbol, the third time-domain unit is a GI before the fourth time-domain unit, and the fourth time-domain unit is an OOK-ON symbol.

FIG. 36(a) shows a measurement window of terminal 1. The measurement window supported by terminal 1 is 12 symbols, that is, the terminal device supports the time-frequency synchronization based on GIs of up to 12 contiguous OOK symbols.

FIG. 36(b) shows a measurement window of terminal 2. The measurement window supported by terminal 2 is 8 symbols, that is, the terminal device supports the time-frequency synchronization based on GIs of up to 8 contiguous OOK symbols.

Thus, a capability of terminal 1 is superior to that of terminal 2.

Therefore, in a case where the first signal is transmitted to terminal 1 or transmitted by terminal 1, the time-domain resource of the first signal may include more time-domain units, and duration of each time-domain unit may be longer; and in a case where the first signal is transmitted to terminal 2 or transmitted by terminal 2, the time-domain resource of the first signal may include less time-domain units, and duration of each time-domain unit may also be shorter. Simply, compared with terminal 2, terminal 1 supports receiving or transmitting a longer-duration first signal to achieve higher-precision synchronization.

The above content about the design of the first signal for the terminal devices with different capabilities may be flexibly combined with the first signal mentioned in the embodiments of S910, S1010, S2010, and S2110. Alternatively, the above content about the design of the first signal for the terminal devices with different capabilities may be applicable to the first signal involved in S910, S1010, S2010, and S2110.

Targeted first signals are designed for the terminal devices with different capabilities. In this way, the first signals have a higher degree of matching with the terminal devices, and are transmitted more in line with the capabilities of the terminal devices, which helps improve resource utilization efficiency and transmission quality of the first signals.

**Design of the group of second time-domain units:**

As described above, in some embodiments, each first time-domain unit is located before a group of second time-domain units. Quantities of second time-domain units in different groups of second time-domain units are the same or different.

Herein, it is assumed that each group of second time-domain units includes N second time-domain units, and N is an integer greater than 1.

It is understood that third signals corresponding to the N second time-domain units may all be the same, or may be different. Taking the OOK symbol as an example, there may be both the OOK-ON symbol and the OOK-OFF symbol in the N second time-domain units. However, it is difficult to perform the envelope detection and/or the correlation detection for the OOK-OFF symbol, and there is significant challenge and low accuracy in performing the envelope detection and/or correlation detection on a waveform presented by the OOK-OFF symbol. Therefore, the OOK-ON symbol should be used as much as possible for the synchronization to improve accuracy of a synchronization result.

As described above, the second signal in the first time-domain unit is determined based on part of the third signal in the second time-domain unit. The part of the third signal may be located at a start portion, a middle portion, or an end portion of the third signal, or may be any a continuous segment of the third signal. Herein, it is assumed that the part of third signal is located at the end portion of the third signal. Therefore, as illustrated in FIG. 13, or FIG. 14, or FIG. 30, the second signal in the first time-domain unit is determined based on part of a signal located at the end portion of a group of second time-domain units. That is, a signal in an end portion of a last second time-domain unit among the N second time-domain units is used to determine the second signal.

Considering the expectation of using the OOK-ON symbol as much as possible for the synchronization, it is also understandable to set the last second time-domain unit among the N second time-domain units as the OOK-ON symbol.

Therefore, in some embodiments, a last second time-domain unit in each group of second time-domain units corresponds to the first sequence element. That is, a third signal of the first signal in the last second time-domain unit in each group of second time-domain units is a signal modulated based on the first sequence element. Exemplarily, the last second time-domain unit in each group of second time-domain units corresponds to the OOK-ON symbol, or a last second time-domain unit among each N second time-domain units corresponds to the OOK-ON symbol.

Similarly, in a case where the second signal is determined based on the part of the third signal, and the part of the third signal is located at the start portion, and a first second time-domain unit in each group of second time-domain units corresponds to the first sequence element, for example, the first second time-domain unit in each group of second time-domain units corresponds to the OOK-ON symbol. This is more conducive to improving the accuracy of the synchronization result.

The above content about the design of the group of second time-domain units may be flexibly combined with the first signal mentioned in the embodiments of S910, S1010, S2010, and S2110. Alternatively, the above content about the design of the group of second time-domain units may be applicable to the first signal involved in S910, S1010, S2010, and S2110.

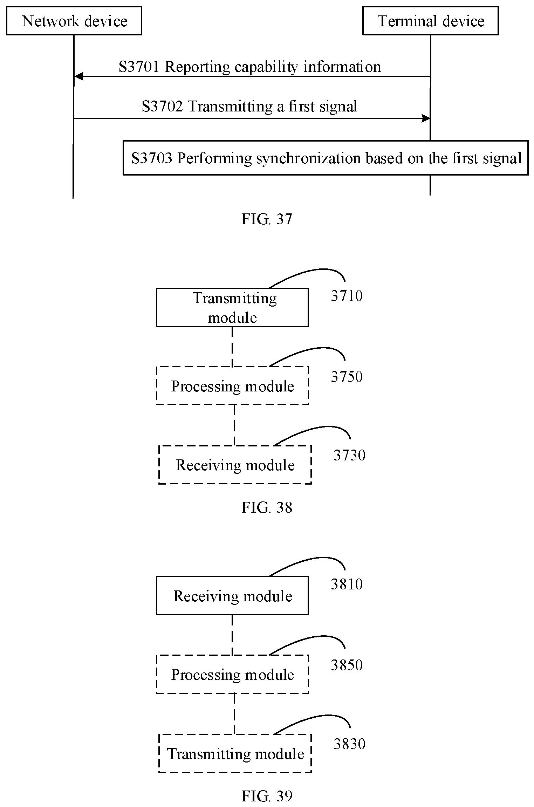

FIG. 37 is a schematic flowchart of a communication method according to some exemplary embodiments of the present disclosure. The communication method is performed by a network device illustrated in FIG. 1 or FIG. 3 and a terminal device illustrated in FIG. 1 or FIG. 2 or FIG. 3. Moreover, illustrative description is provided by using an example in which the network device is practiced as a first node illustrated in FIG. 9 or FIG. 10 and the terminal device is practiced as a second node illustrated in FIG. 20 or FIG. 21. The communication method includes at least part of the following processes.

In S3701, the terminal device reports capability information to the network device.

The capability information is used to indicate a capability of the terminal device for performing synchronization. Exemplarily, the capability information includes a measurement window size supported by the terminal device.

It should be noted that S3701 is optional.

In S3702, the network device transmits a first signal.

In some embodiments, a time-domain resource of the first signal includes a first quantity of first time-domain units and a second quantity of second time-domain units, and the first time-domain units are used for synchronization at the second node.

For relevant content of the first time-domain unit and the second time-domain unit, reference may be made to S910, S1010, S2010, and S2110. Details are not described herein again.

In some embodiments, the time-domain resource of the first signal further includes a third quantity of third time-domain units and a fourth quantity of fourth time-domain units, and the third time-domain units are used for synchronization at the second node.

For relevant content of the third time-domain unit and the fourth time-domain unit, reference may be made to S910, S1010, S2010, and S2110. Details are not described herein again.

In some embodiments, the first signal is transmitted by the network device in a unicast, multicast, or broadcast manner.

In some embodiments, first signals transmitted by the network device to different terminal devices are different. In some embodiments, the network device configures the first signal for the terminal device based on the received capability information and/or a communication protocol and/or a business requirement. For relevant content, reference may be made to the "design of the first signal for terminal devices with different capabilities", and details are not described herein again.

**In S3703,** the terminal device performs the synchronization based on the first signal.

In some embodiments, the terminal device performs the synchronization based on the first time-domain unit and/or the third time-domain unit that are included in the time-domain resource of the first signal, and receives and/or detects the first signal based on a synchronization result.

In some embodiments, the terminal device performs the synchronization based on the third time-domain unit included in the time-domain resource of the first signal in a process of receiving and/or detecting the first signal.

For relevant content, reference may be made to S910, S1010, S2010, and S2110. Details are not described herein again.

In summary, in the communication method according to the embodiments of the present disclosure, the first time-domain unit is used for the synchronization. A synchronization effect of the first time-domain unit improves reception quality of the third signal and ensures reception accuracy of information carried by the third signal. A first signal whose time-domain resource includes the first time-domain unit enables the second node to work within an accurate time-domain range and/or frequency-domain range as much as possible, such that the transmission quality of the second node is ensured, the interference between the second node and another device is avoided, and the overall transmission efficiency and communication quality of a communication system are improved. Moreover, the third time-domain unit is also used for the synchronization. A first signal whose time-domain resource includes the third time-domain unit enables the second node to further perform time-frequency synchronization in the process of receiving the first signal, such that a time-/frequency-domain calibration degree of the first signal in the reception process is ensured, and an impact on reception quality of the first signal due to continuous time/frequency-domain deviation of the first signal in the reception process is avoided. The first time-domain unit and the third time-domain unit improve synchronization performance, and enhance transmission quality and efficiency of the first signal. In addition, a variety of configuration schemes for the first time-domain unit, the second time-domain unit, the third time-domain unit, and the fourth time-domain unit are provided to satisfy synchronization requirements in various communication scenarios. In addition, the network device is supported to configure a more reasonable and targeted first signal based on a capability of the terminal device, such that the time-domain units in the time-domain resource of the first signal are more in line with a synchronization capability of the terminal device, so as to improve accuracy of the synchronization result of the terminal device and further enhance the reception quality of the first signal.

FIG. 38 is a structural block diagram of a communication apparatus according to some exemplary embodiments of the present disclosure. The communication apparatus may be practiced as a first node illustrated in FIG. 9 or FIG. 10, or as part of the first node illustrated in FIG. 9 or FIG. 10. The first node may be a network device illustrated in FIG. 1 or FIG. 3, or may be a terminal device illustrated in FIG. 1 or FIG. 2 or FIG. 3. The communication apparatus includes a transmitting module 3710. In some embodiments, the communication apparatus further includes at least part of a receiving module 3730 and/or a processing module 3750.

The transmitting module 3710 is configured to transmit a first signal, wherein a time-domain resource of the first signal includes a first quantity of first time-domain units and a second quantity of second time-domain units, wherein the first time-domain units are used for synchronization at a second node;

wherein a second signal is associated with a third signal, wherein the second signal is a signal of the first signal which locates in one of the first time-domain units, and the third signal is a signal of the first signal which locates in one of the second time-domain units.

In some embodiments, the second signal is determined based on at least part of the third signal.

In some embodiments, the at least part of the third signal is located at an end portion of the third signal, or at a start portion of the third signal, or at a middle portion of the third signal.

In some embodiments, a quantity of first time-domain units is the same as a quantity of second time-domain units, and each first time-domain unit is located before an associated second time-domain unit.

In some embodiments, a quantity of first time-domain units is less than a quantity of second time-domain units, and each first time-domain unit is located before a group of second time-domain units;

wherein the group of second time-domain units includes at least two contiguous second time-domain units, and the at least two second time-domain units include a second time-domain unit associated with one first time-domain unit.

In some embodiments, signals of the first signal which locate in the second quantity of second time-domain units are formed based on a first sequence group, wherein the first sequence group includes at least one first sequence element and at least one second sequence element;

wherein the at least one first sequence element takes a first value, and the at least one second sequence element takes a second value.

In some embodiments, the first sequence group is acquired by encoding first information, a quantity of bits corresponding to the first sequence group is X times a quantity of bits corresponding to the first information, and each bit corresponding to the first information corresponds to at least one first sequence element and at least one second sequence element.

In some embodiments, the first sequence group is configured by the network device, or defined by a communication protocol.

In some embodiments, at least one of the following items corresponding to the first sequence group is associated with a capability of the terminal device: a quantity of first sequence elements; a quantity of second sequence elements; a quantity of second sequence elements between two first sequence elements; or a quantity of first sequence elements between two second sequence elements.

In some embodiments, the time-domain resource of the first signal further includes a third quantity of third time-domain units and a fourth quantity of fourth time-domain units, wherein the third time-domain units are used for synchronization at the second node;

wherein a fourth signal is associated with a fifth signal, wherein the fourth signal is a signal of the first signal which locates in one of the third time-domain units, and the fifth signal is a signal of the first signal which locates in one of the fourth time-domain unit.

In some embodiments, the fifth signal is determined based on at least part of the third signal.

In some embodiments, signals of the first signal which locate in the fourth time-domain units are formed based on a second sequence group, and the second sequence group includes at least one first sequence element, wherein the first sequence element takes a first value.

In some embodiments, the fourth signal is determined based on at least part of the fifth signal.

In some embodiments, the at least part of the fifth signal is located at an end portion of the fifth signal, or at a start portion of the fifth signal, or at a middle portion of the fifth signal.

In some embodiments, the first signal is formed by puncturing at least one of the third time-domain units, and/or the first signal is formed by puncturing at least one of the fourth time-domain units.

In some embodiments, the fourth time-domain units are periodically distributed in the time-domain resource of the first signal, or the fourth time-domain units are aperiodically distributed in the time-domain resource of the first signal.

In some embodiments, lengths of third time-domain units associated with different ones of the fourth time-domain units are the same or different.

In some embodiments, lengths of the different ones of the fourth time-domain units are the same or different.

In some embodiments, a length of each of the fourth time-domain units is the same as a length of each of the second time-domain units, or a length of each of the fourth time-domain units is K times a length of each of the second time-domain units, or a length of each of the fourth time-domain units is 1/K of a length of each of the second time-domain units;

wherein K is a positive integer.

In some embodiments, a length of each of the third time-domain units is the same as or different from a length of each of the first time-domain units.

In some embodiments, the length of each of the third time-domain units satisfies at least one of following conditions: defined by a communication protocol; configured by a network device; associated with a capability of a terminal device; associated with a transmission rate of the first signal; or associated with a subcarrier spacing in a frequency-domain resource of the first signal.

In some embodiments, a quantity of third time-domain units is the same as a quantity of fourth time-domain units, and each third time-domain unit is located before an associated fourth time-domain unit.

In some embodiments, a quantity of third time-domain units is less than a quantity of fourth time-domain units, and each third time-domain unit is located before a group of fourth time-domain units;

wherein the group of fourth time-domain units includes at least two contiguous fourth time-domain units, and the at least two fourth time-domain units include a fourth time-domain unit associated with the third time-domain unit.

In some embodiments, a start position of one of the third time-domain units is an end position of one of the second time-domain units; or a start position of one of the third time-domain units is a middle position of one of the second time-domain units; or a start position of one of the third time-domain units is an end position of one of the fourth time-domain units.

In some embodiments, a quantity of third time-domain units and/or a quantity of fourth time-domain units are associated with a capability of a terminal device.

In some embodiments, envelope detection results of q groups of fourth signals and at least part of associated fifth signals are used for time-domain synchronization, and/or correlation detection results of q groups of fourth signals and at least part of associated fifth signals are used for frequency-domain synchronization;

wherein the q groups of fourth signals are signals of the first signal which locate in q groups of third time-domain units, and q is an integer greater than or equal to 1.

In some embodiments, each group of the q groups of fourth signals includes signals of the first signal which locate in at least two third time-domain units.

In some embodiments, a fourth time-domain unit is present between the q groups of third time-domain units, or a plurality of fourth time-domain units are present between the q groups of third time-domain units.

In some embodiments, two of the second time-domain units correspond to two adjacent sequence elements in a first sequence group; or two of the second time-domain units correspond to two non-adjacent sequence elements in a first sequence group;

wherein a third time-domain unit is present between the two of the second time-domain units, and waveforms of the first signal in the second time-domain units are formed based on the first sequence group.

In some embodiments, a quantity of first time-domain units and/or a quantity of second time-domain units are associated with a capability of a terminal device.

In some embodiments, envelope detection results of p groups of second signals and at least part of associated third signals are used for time-domain synchronization, and/or correlation detection results of p groups of second signals and at least part of associated third signals are used for frequency-domain synchronization;

wherein the p groups of second signals are signals of the first signal which locate in p groups of first time-domain units, and p is an integer greater than or equal to 1.

In some embodiments, each group of the p groups of second signals includes signals of the first signal which locate in at least two of the first time-domain units.

In some embodiments, a second time-domain unit is present between the p groups of first time-domain units, or a plurality of second time-domain units are present between the p groups of first time-domain units.

In some embodiments, the communication apparatus further includes the receiving module 3730 configured to receive a signal and/or data from the terminal device. Exemplarily, the receiving module 3730 is configured to receive capability information of the terminal device.

In some embodiments, the communication apparatus further includes the processing module 3750 configured to generate the first signal.

In some embodiments, the communication apparatus according to the embodiments of the present disclosure includes a transmitting module 3710 that supports performing all transmitting processes performed by the first node in the above embodiments, such as S910 and S1010.

In some embodiments, the communication apparatus according to the embodiments of the present disclosure includes a plurality of transmitting modules 3710 that each support performing some transmitting processes performed by the first node in the above embodiments.

In some embodiments, processes performed by different transmitting modules 3710 are the same, partially the same, or different.

In some embodiments, the communication apparatus according to the embodiments of the present disclosure includes A processing module 3750 that supports performing all processing-related processes, all generation-related processes, and all determination-related processes performed by the first node in the above embodiments.

In some embodiments, the communication apparatus according to the embodiments of the present disclosure includes a plurality of processing modules 3750 that each support performing some processing-related processes, some generation-related processes, and some determination-related processes performed by the first node in the above embodiments.

In some embodiments, processes performed by different processing modules 3750 are the same, partially the same, or different.

In some embodiments, the communication apparatus according to the embodiments of the present disclosure includes A receiving module 3730 that supports performing all receiving processes performed by the first node in the above embodiments.

In some embodiments, the communication apparatus according to the embodiments of the present disclosure includes a plurality of receiving modules 3730 that each support performing some receiving processes performed by the first node in the above embodiments.

In some embodiments, processes performed by different receiving modules 3730 are the same, partially the same, or different.

In summary, in the communication apparatus according to the embodiments of the present disclosure, the first time-domain unit is used for the synchronization. A synchronization effect of the first time-domain unit improves reception quality of the third signal and ensures reception accuracy of information carried by the third signal. In addition, a first signal whose time-domain resource includes the first time-domain unit enables the second node to work within an accurate time-domain range and/or frequency-domain range as much as possible, such that the transmission quality of the second node is ensured, the interference between the second node and another device is avoided, and the overall transmission efficiency and communication quality of a communication system are improved. Moreover, the third time-domain unit is also used for the synchronization. A synchronization effect of the third time-domain unit improves reception quality of the fifth signal and ensures reception accuracy of information carried by the fifth signal. The fourth signal and the fifth signal serve as reference signals in a process of receiving the first signal, such that the reception accuracy of the information carried by the third signal is ensured. A first signal whose time-domain resource includes the third time-domain unit and the fourth time-domain unit further enables the second node to further perform time-frequency synchronization in the process of receiving the first signal, such that a time/frequency-domain calibration degree of the first signal in the reception process is ensured, and an impact on reception quality of the first signal due to continuous time/frequency-domain deviation of the first signal in the reception process is avoided. The first time-domain unit and the third time-domain unit improve synchronization performance, and enhances transmission quality and efficiency of the first signal. In addition, a variety of configuration schemes for the first time-domain unit, the second time-domain unit, the third time-domain unit, and the fourth time-domain unit are provided to satisfy synchronization requirements in various communication scenarios.

FIG. 39 is a block diagram of a communication apparatus according to some exemplary embodiments of the present disclosure. The communication apparatus may be practiced as a second node illustrated in FIG. 20 or FIG. 21, or as part of the second node illustrated in FIG. 20 or FIG. 21. The second node may be a network device illustrated in FIG. 1 or FIG. 3, or may be a terminal device illustrated in FIG. 1 or FIG. 2 or FIG. 3. The communication apparatus includes a receiving module 3810. In some embodiments, the communication apparatus further includes at least part of a transmitting module 3830 and/or a processing module 3850.

The receiving module 3810 is configured to receive a first signal, wherein a time-domain resource of the first signal includes a first quantity of first time-domain units and a second quantity of second time-domain units, wherein the first time-domain units are used for synchronization at the second node;

wherein a second signal is associated with a third signal, wherein the second signal is a signal of the first signal which locates in one of the first time-domain units, and the third signal is a signal of the first signal which locates in one of the second time-domain units.

In some embodiments, the second signal is determined based on at least part of the third signal.

In some embodiments, the at least part of the third signal is located at an end portion of the third signal, or at a start portion of the third signal, or at a middle portion of the third signal.

In some embodiments, a quantity of first time-domain units is the same as a quantity of second time-domain units, and each first time-domain unit is located before an associated second time-domain unit.

In some embodiments, a quantity of first time-domain units is less than a quantity of second time-domain units, and each first time-domain unit is located before a group of second time-domain units;

wherein the group of second time-domain units includes at least two contiguous second time-domain units, and the at least two second time-domain units include a second time-domain unit associated with one first time-domain unit.

In some embodiments, signals of the first signal which locate in the second time-domain units are formed based on a first sequence group, wherein the first sequence group includes at least one first sequence element and at least one second sequence element;

wherein the at least one first sequence element takes a first value, and the at least one second sequence element takes a second value.

In some embodiments, the first sequence group is acquired by encoding first information, a quantity of bits corresponding to the first sequence group is X times a quantity of bits corresponding to the first information, and each bit corresponding to the first information corresponds to at least one first sequence element and at least one second sequence element.

In some embodiments, the first sequence group is configured by the network device, or defined by a communication protocol.

In some embodiments, at least one of the following items corresponding to the first sequence group is associated with a capability of the terminal device: a quantity of first sequence elements; a quantity of second sequence elements; a quantity of second sequence elements between two first sequence elements; or a quantity of first sequence elements between two second sequence elements.

In some embodiments, the time-domain resource of the first signal further includes a third quantity of third time-domain units and a fourth quantity of fourth time-domain units, wherein the third time-domain units are used for synchronization at the second node;

wherein a fourth signal is associated with a fifth signal, wherein the fourth signal is a signal of the first signal which locates in one of the third time-domain units, and the fifth signal is a signal of the first signal which locates in one of the fourth time-domain units.

In some embodiments, the fifth signal is determined based on at least part of the third signal.

In some embodiments, signals of the first signal which locate in the fourth time-domain units are formed based on a second sequence group, and the second sequence group includes at least one first sequence element, wherein the first sequence element takes a first value.

In some embodiments, the fourth signal is determined based on at least part of the fifth signal.

In some embodiments, the at least part of the fifth signal is located at an end portion of the fifth signal, or at a start portion of the fifth signal, or at a middle portion of the fifth signal.

In some embodiments, the first signal is formed by puncturing at least one of the third time-domain units, and/or the first signal is formed by puncturing at least one of the fourth time-domain units.

In some embodiments, the fourth time-domain units are periodically distributed in the time-domain resource of the first signal, or the fourth time-domain units are aperiodically distributed in the time-domain resource of the first signal.

In some embodiments, lengths of third time-domain units associated with different ones of the fourth time-domain units are the same or different.

In some embodiments, lengths of the different ones of the fourth time-domain units are the same or different.

In some embodiments, a length of each of the fourth time-domain units is the same as a length of each of the second time-domain units, or a length of each of the fourth time-domain units is K times a length of each of the second time-domain units, or a length of each of the fourth time-domain units is 1/K of a length of each of the second time-domain units, wherein K is a positive integer.

In some embodiments, a length of each of the third time-domain units is the same as or different from a length of each of the first time-domain units.

In some embodiments, the length of each of the third time-domain units satisfies at least one of following conditions: defined by a communication protocol; configured by a network device; associated with a capability of a terminal device; associated with a transmission rate of the first signal; or associated with a subcarrier spacing in a frequency-domain resource of the first signal.

In some embodiments, a quantity of third time-domain units is the same as a quantity of fourth time-domain units, and each third time-domain unit is located before an associated fourth time-domain unit.

In some embodiments, a quantity of third time-domain units is less than a quantity of fourth time-domain units, and each third time-domain unit is located before a group of fourth time-domain units;

wherein the group of fourth time-domain units includes at least two contiguous fourth time-domain units, and the at least two fourth time-domain units include a fourth time-domain unit associated with the third time-domain unit.

In some embodiments, a start position of one of the third time-domain units is an end position of one of the second time-domain units; or a start position of one of the third time-domain units is a middle position of one of the second time-domain units; or a start position of one of the third time-domain units is an end position of one of the fourth time-domain units.

In some embodiments, a quantity of third time-domain units and/or a quantity of fourth time-domain units are associated with a capability of a terminal device.

In some embodiments, envelope detection results of q groups of fourth signals and at least part of associated fifth signals are used for time-domain synchronization, and/or correlation detection results of q groups of fourth signals and at least part of associated fifth signals are used for frequency-domain synchronization,

wherein the q groups of fourth signals are signals of the first signal which locate in q groups of third time-domain units, and q is an integer greater than or equal to 1.

In some embodiments, each group of the q groups of fourth signals includes signals of the first signal which locate in at least two third time-domain units.

In some embodiments, a fourth time-domain unit is present between the q groups of third time-domain units, or a plurality of fourth time-domain units are present between the q groups of third time-domain units.

In some embodiments, two of the second time-domain units correspond to two adjacent sequence elements in a first sequence group; or two of the second time-domain units correspond to two non-adjacent sequence elements in a first sequence group,

wherein a third time-domain unit is present between the two of the second time-domain units, and waveforms of the first signal in the second time-domain units are formed based on the first sequence group.

In some embodiments, a quantity of first time-domain units and/or a quantity of second time-domain units are associated with a capability of a terminal device.

In some embodiments, envelope detection results of p groups of second signals and at least part of associated third signals are used for time-domain synchronization, and/or correlation detection results of p groups of second signals and at least part of associated third signals are used for frequency-domain synchronization,

wherein the p groups of second signals are signals of the first signal which locate in p groups of first time-domain units, and p is an integer greater than or equal to 1.

In some embodiments, each group of the p groups of second signals includes signals of the first signal which locate in at least two of the first time-domain units.

In some embodiments, a second time-domain unit is present between the p groups of first time-domain units, or a plurality of second time-domain units are present between the p groups of first time-domain units.

In some embodiments, the communication apparatus further includes the transmitting module 3830 configured to transmit a signal and/or data. Exemplarily, the transmitting module 3830 is configured to transmit capability information to the network device.

In some embodiments, the communication apparatus further includes the processing module 3850 configured to perform synchronization based on the first signal.

In some embodiments, the processing module 3850 is configured to perform the time-domain synchronization and/or the frequency-domain synchronization based on the first time-domain unit.

In some embodiments, the processing module 3850 is configured to perform the time-domain synchronization and/or the frequency-domain synchronization based on the third time-domain unit.

In some embodiments, the communication apparatus according to the embodiments of the present disclosure includes a receiving module 3810 that supports performing all receiving processes performed by the second node in the above embodiments, such as S2010 and S2110.

In some embodiments, the communication apparatus according to the embodiments of the present disclosure includes a plurality of receiving modules 3810 that each support performing some receiving processes performed by the second node in the above embodiments.

In some embodiments, processes performed by different receiving modules 3810 are the same, partially the same, or different.

In some embodiments, the communication apparatus according to the embodiments of the present disclosure includes a transmitting module 3830 that supports performing all transmitting processes performed by the second node in the above embodiments.

In some embodiments, the communication apparatus according to the embodiments of the present disclosure includes a plurality of transmitting modules 3830 that each support performing some transmitting processes performed by the second node in the above embodiments.

In some embodiments, the processes performed by different transmitting modules 3830 are the same, partially the same, or different.

In some embodiments, the communication apparatus according to the embodiments of the present disclosure includes a processing module 3850 that supports performing all processing-related processes, all generation-related processes, and all determination-related processes performed by the second node in the above embodiments.

In some embodiments, the communication apparatus according to the embodiments of the present disclosure includes a plurality of processing modules 3850 that each support performing some processing-related processes, some generation-related processes, and some determination-related processes performed by the second node in the above embodiments.

In some embodiments, processes performed by different processing modules 3850 are the same, partially the same, or different.

In summary, in the communication apparatus according to the embodiments of the present disclosure, the first time-domain unit is used for the synchronization. A synchronization effect of the first time-domain unit improves reception quality of the third signal and ensures reception accuracy of information carried by the third signal. In addition, a first signal whose time-domain resource includes the first time-domain unit enables the second node to work within an accurate time-domain range and/or frequency-domain range as much as possible, such that the transmission quality of the second node is ensured, the interference between the second node and another device is avoided, and the overall transmission efficiency and communication quality of a communication system are improved. Moreover, the third time-domain unit is also used for the synchronization. A synchronization effect of the third time-domain unit improves reception quality of the fifth signal and ensures reception accuracy of information carried by the fifth signal. The fourth signal and the fifth signal serve as reference signals in a process of receiving the first signal, such that the reception accuracy of the information carried by the third signal is ensured. A first signal whose time-domain resource includes the third time-domain unit and the fourth time-domain unit further enables the second node to further perform time-frequency synchronization in the process of receiving the first signal, such that a time/frequency-domain calibration degree of the first signal in the reception process is ensured, and an impact on reception quality of the first signal due to continuous time/frequency-domain deviation of the first signal in the reception process is avoided. The first time-domain unit and the third time-domain unit improve synchronization performance, and enhances transmission quality and efficiency of the first signal. In addition, a variety of configuration schemes for the first time-domain unit, the second time-domain unit, the third time-domain unit, and the fourth time-domain unit are provided to satisfy synchronization requirements in various communication scenarios.

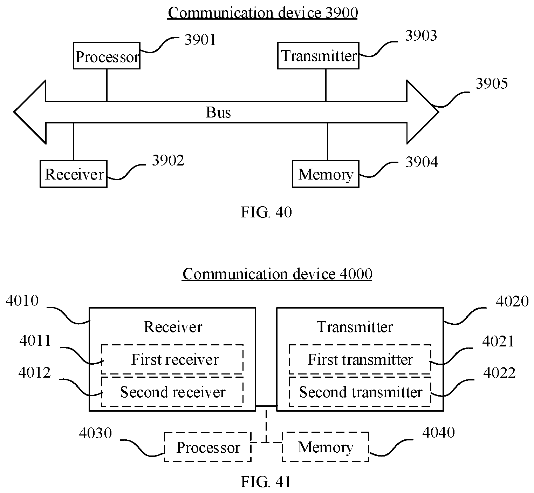

FIG. 40 is a schematic structural diagram of a communication device 3900 according to some exemplary embodiments of the present disclosure. The communication device 3900 includes a processor 3901, a receiver 3902, a transmitter 3903, a memory 3904, and a bus 3905. The communication device 3900 may be configured to perform at least part of processes performed by a first node illustrated in FIG. 9 or FIG. 10, or may be configured to perform at least part of processes performed by a second node illustrated in FIG. 20 or FIG. 21.

The processor 3901 includes one or more processing cores. The processor 3901 runs a software program and module to execute various functional applications and information processing.

The receiver 3902 and the transmitter 3903 may be practiced as a communication assembly. The communication assembly may be a communication chip. The communication component may be referred to as a transceiver. In some embodiments, the receiver 3902 is configured to implement functions and processes of the above receiving module 3730, and the transmitter 3903 is configured to implement functions and processes of the above transmitting module 3710.

The memory 3904 is connected to the processor 3901 through the bus 3905.

The memory 3904 is configured to store at least one instruction. The processor 3901 is configured to execute the at least one instruction to implement various processes in the above method embodiments. The processor 3901 is configured to implement functions of the above processing module 3750.

In addition, the memory 3904 may be implemented by any type of volatile or non-volatile storage device or a combination thereof. The volatile or non-volatile storage device includes but is not limited to a magnetic disk or an optical disc, an electrically-erasable programmable read-only memory (EEPROM), an erasable programmable read-only memory (EPROM), a static random access memory (SRAM), a read-only memory (ROM), a magnetic memory, a flash memory, or a programmable ROM (PROM).

In some embodiments, the receiver 3902 independently receives a signal/data, or the processor 3901 controls the receiver 3902 to receive a signal/data, or the processor 3901 requests the receiver 3902 to receive a signal/data, or the processor 3901 cooperates with the receiver 3902 to receive a signal/data.

In some embodiments, the transmitter 3903 independently transmits a signal/data, or the processor 3901 controls the transmitter 3903 to transmit a signal/data, or the processor 3901 requests the transmitter 3903 to transmit a signal/data, or the processor 3901 cooperates with the transmitter 3903 to transmit a signal/data.

FIG. 41 is a schematic structural diagram of a communication device 4000 according to some exemplary embodiments of the present disclosure. The communication device 4000 includes a receiver 4010 and a transmitter 4020. The communication device 4000 may be configured to perform at least part of processes performed by a first node illustrated in FIG. 9 or FIG. 10, or may be configured to perform at least part of processes performed by a second node illustrated in FIG. 20 or FIG. 21.

The receiver 4010 and the transmitter 4020 may be practiced as a communication assembly. The communication assembly may be a communication chip. The communication assembly may be referred to as a transceiver.

In some embodiments, the receiver 4010 is configured to implement functions and processes of the above receiving module 3810. In some embodiments, the receiver 4010 is practiced as a first receiver 4011 and a second receiver 4012.

In some embodiments, the transmitter 4020 is configured to implement functions and processes of the above transmitting module 3830. In some embodiments, the transmitter 4020 is practiced as a first transmitter 4021 and a second transmitter 4022.

In some embodiments, the communication device 4000 may further include a processor 4030. The processor 4030 includes one or more processing cores. The processor 4030 runs one or more software programs and modules to execute various functional applications and information processing. In some embodiments, the processor 4030 is configured to implement functions and processes of the processing module 3850.

In some embodiments, the communication device 4000 may further include a memory 4040. The memory 4040 may be configured to store at least one instruction. The processor 4010 is configured to execute the at least one instruction to implement various processes in the above method embodiments. In addition, the memory 4004 may be implemented by any type of volatile or non-volatile storage device or a combination thereof. The volatile or non-volatile storage device includes but is not limited to: a magnetic disk or an optical disc, an EEPROM, an EPROM, a SRAM, a ROM, a magnetic memory, a flash memory, and a PROM.

In some embodiments, the communication device 4000 may further include a bus (not illustrated in the figure). In some embodiments, the memory 4040 is connected to the processor 4030 through the bus.

In some embodiments, the receiver 4010 independently receives a signal/data, or the processor 4030 controls the receiver 4010 to receive a signal/data, or the processor 4030 requests the receiver 4010 to receive a signal/data, or the processor 4030 cooperates with the receiver 4010 to receive a signal/data.

In some embodiments, the transmitter 4020 independently transmits a signal/data, or the processor 4030 controls the transmitter 4020 to transmit a signal/data, or the processor 4030 requests the transmitter 4020 to transmit a signal/data, or the processor 4030 cooperates with the transmitter 4020 to transmit a signal/data.

In some embodiments, the first receiver 4011 is practiced as a WUR, and/or the second receiver 4012 is implemented as a primary receiver.

In some embodiments, the receiver 4010 is practiced as a combined receiver of the WUR and the primary receiver.

In some embodiments, the first transmitter 4021 is practiced as a primary transmitter, and/or the second transmitter 4022 is practiced as a backscatter transmitter.

In some embodiments, the transmitter 4020 is practiced as a combined transmitter of the primary transmitter and the backscatter transmitter.

In some embodiments, the processor 4030 and the receiver 4010 are practiced as a module, or the processor 4030 is practiced as part of the receiver 4010.

In some embodiments, the processor 4030 and the transmitter 4020 are practiced as a module, or the processor 4030 is practiced as part of the transmitter 4020.

In some embodiments, the communication device 4000 includes one or more processors 4030, and different processors are configured to execute same or different processes among the above processing-related processes.

In some exemplary embodiments of the present disclosure, a computer-readable storage medium is further provided. The computer-readable storage medium stores at least one program. The at least one program is loaded and executed by a processor to perform the communication method according to the above method embodiments.

In some exemplary embodiments of the present disclosure, a chip is further provided. The chip includes programmable logic circuitry and/or one or more program instructions. When running on a communication device, the chip is configured to perform the communication method according to the above method embodiments.

In some exemplary embodiments of the present disclosure, a computer program product is further provided. When running on a processor of a computer device, the computer program product enables the computer device to perform the above communication method.

In some exemplary embodiments of the present disclosure, a computer program is further provided. The computer program includes one or more computer instructions. A processor of a computer device executes the one or more computer instructions to enable the computer device to perform the above communication method.

Persons of ordinary skill in the art can understand that all or some of the processes in the above embodiments may be implemented by hardware, or by a program instructing related hardware. The program may be stored in a computer-readable storage medium. The storage medium may be a ROM, a magnetic disk, an optical disc, or the like.

The foregoing descriptions are merely optional embodiments of the present disclosure and are not intended to limit the present disclosure. Any modification, equivalent replacement, and improvement within the spirit and principle of the present disclosure shall fall within the protection scope of the present disclosure.

**Claims**

1. A communication method, performed by a first node, the method comprising:

   transmitting a first signal, wherein a time-domain resource of the first signal comprises a first quantity of first time-domain units and a second quantity of second time-domain units, wherein the first time-domain units are used for synchronization at a second node;
   wherein a second signal is associated with a third signal, wherein the second signal is a signal of the first signal which locates in one of the first time-domain units, and the third signal is a signal of the first signal which locates in one of the second time-domain units.

2. The method according to claim 1, wherein the second signal is determined based on at least part of the third signal.

3. The method according to claim 2, wherein the at least part of the third signal is located at an end portion of the third signal, or at a start portion of the third signal, or at a middle portion of the third signal.

4. The method according to any one of claims 1 to 3, wherein a quantity of first time-domain units is the same as a quantity of second time-domain units, and each of the first time-domain units is located before an associated second time-domain unit.

5. The method according to any one of claims 1 to 3, wherein a quantity of first time-domain units is less than a quantity of second time-domain units, and each of the first time-domain units is located before a group of second time-domain units;
   wherein the group of second time-domain units comprises at least two contiguous second time-domain units, wherein the at least two second time-domain units comprise a second time-domain unit associated with one of the first time-domain units.

6. The method according to any one of claims 1 to 5, wherein signals of the first signal which locate in the second time-domain units are formed based on a first sequence group, wherein the first sequence group comprises at least one first sequence element and at least one second sequence element;

wherein the at least one first sequence element takes a first value, and the at least one second sequence element takes a second value.

7. The method according to claim 6, wherein the first sequence group is acquired by encoding first information, a quantity of bits corresponding to the first sequence group is X times a quantity of bits corresponding to the first information, and each of the bits corresponding to the first information corresponds to at least one first sequence element and at least one second sequence element.

8. The method according to claim 6 or 7, wherein the first sequence group is configured by a network device or defined by a communication protocol.

9. The method according to any one of claims 6 to 8, wherein at least one of following items corresponding to the first sequence group is associated with a capability of a terminal device:

a quantity of first sequence elements;
a quantity of second sequence elements;
a quantity of second sequence elements between two of the at least one first sequence element; or
a quantity of first sequence elements between two of the at least one second sequence element.

10. The method according to any one of claims 1 to 9, wherein the time-domain resource of the first signal further comprises a third quantity of third time-domain units and a fourth quantity of fourth time-domain units, wherein the third time-domain units are used for synchronization at the second node;

wherein a fourth signal is associated with a fifth signal, wherein the fourth signal is a signal of the first signal which locates in one of the third time-domain units, and the fifth signal is a signal of the first signal which locates in one of the fourth time-domain units.

11. The method according to claim 10, wherein the fifth signal is determined based on at least part of the third signal.

12. The method according to claim 10 or 11, wherein

signals of the first signal which locate in the fourth time-domain units are determined based on the third signal; and/or
signals of the first signal which locate in the third time-domain units are determined based on the second signal.

13. The method according to claim 10 or 11, wherein signals of the first signal which locate in the fourth time-domain units are formed based on a second sequence group, wherein the second sequence group comprises at least one first sequence element;

wherein the first sequence element takes a first value.

14. The method according to any one of claims 10 to 12, wherein the fourth signal is determined based on at least part of the fifth signal.

15. The method according to claim 14, wherein the at least part of the fifth signal is located at an end portion of the fifth signal, or at a start portion of the fifth signal, or at a middle portion of the fifth signal.

16. The method according to any one of claims 10 to 15, wherein the first signal is formed by puncturing at least one of the third time-domain units, and/or the first signal is formed by puncturing at least one of the fourth time-domain units.

17. The method according to any one of claims 10 to 16, wherein the fourth time-domain units are periodically distributed in the time-domain resource of the first signal, or the fourth time-domain units are aperiodically distributed in the time-domain resource of the first signal.

18. The method according to any one of claims 10 to 17, wherein lengths of third time-domain units associated with different ones of the fourth time-domain units are the same or different.

19. The method according to any one of claims 10 to 18, wherein lengths of the different ones of the fourth time-domain units are the same or different.

20. The method according to claim 19, wherein a length of each of the fourth time-domain units is the same as a length of each of the second time-domain units, or a length of each of the fourth time-domain units is K times a length of each of the second time-domain units, or a length of each of the fourth time-domain units is 1/K of a length of each of the second time-domain units, wherein K is a positive integer.

21. The method according to any one of claims 10 to 20, wherein a length of each of the third time-domain units is the same as or different from a length of each of the first time-domain units.

22. The method according to any one of claims 10 to 21, wherein the length of each of the third time-domain units satisfies at least one of following conditions:

defined by a communication protocol;
configured by a network device;
associated with a capability of a terminal device;
associated with a transmission rate of the first signal; or
associated with a subcarrier spacing in a frequency-domain resource of the first signal.

23. The method according to any one of claims 10 to 22, wherein a quantity of third time-domain units is the same as a quantity of fourth time-domain units, and each of the third time-domain units is located before an associated fourth time-domain unit.

24. The method according to any one of claims 10 to 23, wherein a quantity of third time-domain units is less than a quantity of fourth time-domain units, and each of the third time-domain units is located before a group of fourth time-domain units;
wherein the group of fourth time-domain units comprises at least two contiguous fourth time-domain units, wherein the at least two fourth time-domain units comprise a fourth time-domain unit associated with each of the third time-domain units.

25. The method according to any one of claims 10 to 24, wherein

a start position of one of the third time-domain units is an end position of one of the second time-domain units; or
a start position of one of the third time-domain units is a middle position of one of the second time-domain units; or
a start position of one of the third time-domain units is an end position of one of the fourth time-domain units.

26. The method according to any one of claims 10 to 25, wherein a quantity of third time-domain units and/or a quantity of fourth time-domain units are associated with a capability of a terminal device.

27. The method according to any one of claims 10 to 26, wherein

envelope detection results of q groups of fourth signals and at least part of associated fifth signals are used for time-domain synchronization; and/or
correlation detection results of q groups of fourth signals and at least part of associated fifth signals are used for frequency-domain synchronization;
wherein the q groups of fourth signals are signals of the first signal which locate in q groups of third time-domain units, and q is an integer greater than or equal to 1.

28. The method according to claim 27, wherein each group of the q groups of fourth signals comprises signals of the first signal which locate in at least two of the third time-domain units.

29. The method according to claim 27 or 28, wherein a fourth time-domain unit is present between the q groups of third time-domain units, or a plurality of fourth time-domain units are present between the q groups of third time-domain units.

30. The method according to any one of claims 10 to 29, wherein

two of the second time-domain units correspond to two adjacent sequence elements in a first sequence group; or

two of the second time-domain units correspond to two non-adjacent sequence elements in a first sequence group;

wherein a third time-domain unit is present between the two of the second time-domain units, and waveforms of the first signal in the second time-domain units are formed based on the first sequence group.

31. The method according to any one of claims 1 to 30, wherein a quantity of first time-domain units and/or a quantity of second time-domain units are associated with a capability of a terminal device.

32. The method according to any one of claims 1 to 31, wherein

envelope detection results of p groups of second signals and at least part of associated third signals are used for time-domain synchronization; and/or

correlation detection results of p groups of second signals and at least part of associated third signals are used for frequency-domain synchronization;

wherein the p groups of second signals are signals of the first signal which locate in p groups of first time-domain units, and p is an integer greater than or equal to 1.

33. The method according to claim 32, wherein each group of the p groups of second signals comprises signals of the first signal which locate in at least two of the first time-domain units.

34. The method according to claim 32 or 33, wherein a second time-domain unit is present between the p groups of first time-domain units, or a plurality of second time-domain units are present between the p groups of first time-domain units.

35. A communication method, performed by a second node, the method comprising:

receiving a first signal, wherein a time-domain resource of the first signal comprises a first quantity of first time-domain units and a second quantity of second time-domain units, wherein the first time-domain units are used for synchronization at the second node;

wherein a second signal is associated with a third signal, wherein the second signal is a signal of the first signal which locates in one of the first time-domain units, and the third signal is a signal of the first signal which locates in one of the second time-domain units.

36. The method according to claim 35, wherein the second signal is determined based on at least part of the third signal.

37. The method according to claim 36, wherein the at least part of the third signal is located at an end portion of the third signal, or at a start portion of the third signal, or at a middle portion of the third signal.

38. The method according to any one of claims 35 to 37, wherein a quantity of first time-domain units is the same as a quantity of second time-domain units, and each of the first time-domain units is located before an associated second time-domain unit.

39. The method according to any one of claims 35 to 38, wherein a quantity of first time-domain units is less than a quantity of second time-domain units, and each of the first time-domain units is located before a group of second time-domain units;

wherein the group of second time-domain units comprises at least two contiguous second time-domain units, wherein the at least two second time-domain units comprise a second time-domain unit associated with one of the first time-domain units.

40. The method according to any one of claims 35 to 39, wherein signals of the first signal which locate in the second time-domain units are formed based on a first sequence group, wherein the first sequence group comprises at least one first sequence element and at least one second sequence element;

wherein the first sequence element takes a first value, and the second sequence element takes a second value.

41. The method according to claim 40, wherein the first sequence group is acquired by encoding first information, a quantity of bits corresponding to the first sequence group is X times a quantity of bits corresponding to the first information, and each of the bits corresponding to the first information corresponds to at least one first sequence element and at least one second sequence element.

**42.** The method according to claim 40 or 41, wherein the first sequence group is configured by a network device or defined by a communication protocol.

**43.** The method according to any one of claims 40 to 42, wherein at least one of following items corresponding to the first sequence group is associated with a capability of a terminal device:

a quantity of first sequence elements;
a quantity of second sequence elements;
a quantity of second sequence elements between two of the at least one first sequence element; or
a quantity of first sequence elements between two of the at least one second sequence element.

**44.** The method according to any one of claims 35 to 43, wherein the time-domain resource of the first signal further comprises a third quantity of third time-domain units and a fourth quantity of fourth time-domain units, wherein the third time-domain units are for synchronization at the second node;
wherein a fourth signal is associated with a fifth signal, wherein the fourth signal is a signal of the first signal which locates in one of the third time-domain units, and the fifth signal is a signal of the first signal which locates in one of the fourth time-domain units.

**45.** The method according to claim 44, wherein the fifth signal is determined based on at least part of the third signal.

**46.** The method according to claim 44 or 45, wherein

signals of the first signal which locate in the fourth time-domain units are determined based on the third signal; and/or
signals of the first signal which locate in the third time-domain units are determined based on the second signal.

**47.** The method according to claim 44 or 45, wherein signals of the first signal which locate in the fourth time-domain units are formed based on a second sequence group, wherein the second sequence group comprises at least one first sequence element;
wherein the first sequence element takes a first value.

**48.** The method according to any one of claims 44 to 47, wherein the fourth signal is determined based on at least part of the fifth signal.

**49.** The method according to claim 48, wherein the at least part of the fifth signal is located at an end portion of the fifth signal, or at a start portion of the fifth signal, or at a middle portion of the fifth signal.

**50.** The method according to any one of claims 44 to 49, wherein the first signal is formed by puncturing at least one of the third time-domain units, and/or the first signal is formed by puncturing at least one of the fourth time-domain units.

**51.** The method according to any one of claims 44 to 50, wherein the fourth time-domain units are periodically distributed in the time-domain resource of the first signal, or the fourth time-domain units are aperiodically distributed in the time-domain resource of the first signal.

**52.** The method according to any one of claims 44 to 51, wherein lengths of third time-domain units associated with different ones of the fourth time-domain units are the same or different.

**53.** The method according to any one of claims 44 to 52, wherein lengths of the different ones of the fourth time-domain units are the same or different.

**54.** The method according to claim 53, wherein a length of each of the fourth time-domain units is the same as a length of each of the second time-domain units, or a length of each of the fourth time-domain units is K times a length of each of the second time-domain units, or a length of each of the fourth time-domain units is 1/K of a length of each of the second time-domain units, wherein K is a positive integer.

**55.** The method according to any one of claims 44 to 54, wherein a length of each of the third time-domain units is the same as or different from a length of each of the first time-domain units.

**56.** The method according to any one of claims 44 to 55, wherein the length of each of the third time-domain units satisfies at least one of following conditions:

> defined by a communication protocol;
> configured by a network device;
> associated with a capability of a terminal device;
> associated with a transmission rate of the first signal; or
> associated with a subcarrier spacing in a frequency-domain resource of the first signal.

**57.** The method according to any one of claims 44 to 56, wherein a quantity of third time-domain units is the same as a quantity of fourth time-domain units, and each of the third time-domain units is located before an associated fourth time-domain unit.

**58.** The method according to any one of claims 44 to 57, wherein a quantity of third time-domain units is less than a quantity of fourth time-domain units, and each of the third time-domain units is located before a group of fourth time-domain units;
wherein the group of fourth time-domain units comprises at least two contiguous fourth time-domain units, wherein the at least two fourth time-domain units comprise a fourth time-domain unit associated with each of the third time-domain units.

**59.** The method according to any one of claims 44 to 58, wherein

> a start position of one of the third time-domain units is an end position of one of the second time-domain units; or
> a start position of one of the third time-domain units is a middle position of one of the second quantity of second time-domain units; or
> a start position of one of the third time-domain units is an end position of one of the fourth time-domain units.

**60.** The method according to any one of claims 44 to 59, wherein a quantity of third time-domain units and/or a quantity of fourth time-domain units are associated with a capability of a terminal device.

**61.** The method according to any one of claims 44 to 60, wherein

> envelope detection results of q groups of fourth signals and at least part of associated fifth signals are used for time-domain synchronization; and/or
> correlation detection results of q groups of fourth signals and at least part of associated fifth signals are used for frequency-domain synchronization;
> wherein the q groups of fourth signals are signals of the first signal which locate in q groups of third time-domain units, and q is an integer greater than or equal to 1.

**62.** The method according to claim 61, wherein each group of the q groups of fourth signals comprises signals of the first signal which locate in at least two of the third time-domain units.

**63.** The method according to claim 60 or 62, wherein a fourth time-domain unit is present between the q groups of third time-domain units, or a plurality of fourth time-domain units are present between the q groups of third time-domain units.

**64.** The method according to any one of claims 44 to 63, wherein

> two of the second time-domain units correspond to two adjacent sequence elements in a first sequence group; or
> two of the second time-domain units correspond to two non-adjacent sequence elements in a first sequence group;
> wherein a third time-domain unit is present between the two of the second time-domain units, and waveforms of the first signal in the second time-domain units are formed based on the first sequence group.

**65.** The method according to any one of claims 35 to 64, wherein a quantity of first time-domain units and/or a quantity of second time-domain units are associated with a capability of a terminal device.

**66.** The method according to any one of claims 35 to 65, wherein

envelope detection results of p groups of second signals and at least part of associated third signals are used for the time-domain synchronization; and/or

correlation detection results of p groups of second signals and at least part of associated third signals are used for frequency-domain synchronization;

wherein the p groups of second signals are signals of the first signal which locate in p groups of first time-domain units, and p is an integer greater than or equal to 1.

67. The method according to claim 66, wherein each group of the p groups of second signals comprises signals of the first signal which locate in at least two of the first time-domain units.

68. The method according to claim 66 or 67, wherein a second time-domain unit is present between the p groups of first time-domain units, or a plurality of second time-domain units are present between the p groups of first time-domain units.

69. A communication apparatus, comprising:

a transmitting module, configured to transmit a first signal, wherein a time-domain resource of the first signal comprises a first quantity of first time-domain units and a second quantity of second time-domain units, wherein the first time-domain units are used for synchronization at a second node;

wherein a second signal is associated with a third signal, wherein the second signal is a signal of the first signal which locates in one of the first time-domain units, and the third signal is a signal of the first signal which locates in one of the second time-domain units.

70. A communication apparatus, comprising:

a receiving module, configured to receive a first signal, wherein a time-domain resource of the first signal comprises a first quantity of first time-domain units and a second quantity of second time-domain units, wherein the first time-domain units are used for synchronization at the communication apparatus;

wherein a second signal is associated with a third signal, wherein the second signal is a signal of the first signal which locates in one of the first time-domain units, and the third signal is a signal of the first signal which locates in one of the second time-domain units.

71. A communication device, comprising:

a processor;

a receiver and/or a transmitter that are connected to the processor; and

a memory configured to store one or more instructions executable by the processor;

wherein the transmitter is configured to transmit a first signal, and the receiver is configured to receive the first signal;

wherein a time-domain resource of the first signal comprises a first quantity of first time-domain units and a second quantity of second time-domain units, wherein the first time-domain units are used for synchronization at a second node;

wherein a second signal is associated with a third signal, wherein the second signal is a signal of the first signal which locates in one of the first time-domain units, and the third signal is a signal of the first signal which locates in one of the second time-domain units.

72. A communication device, comprising: a receiver and/or a transmitter, wherein the receiver is configured to receive a first signal, and the transmitter is configured to transmit the first signal;

wherein a time-domain resource of the first signal comprises a first quantity of first time-domain units and a second quantity of second time-domain units, wherein the first time-domain units are used for synchronization at a second node;

wherein a second signal is associated with a third signal, wherein the second signal is a signal of the first signal which locates in one of the first time-domain units, and the third signal is a signal of the first signal which locates in one of the second time-domain units.

73. A computer-readable storage medium, storing one or more executable instructions, wherein the one or more executable instructions, when loaded and executed by a processor, cause the processor to perform the communication method as defined in any one of claims 1 to 34 or any one of claims 35 to 68.

74. A chip, comprising: programmable logic circuitry or one or more programs, wherein the chip is configured to perform the communication method as defined in any one of claims 1 to 34 or any one of claims 35 to 68.

75. A computer program product, comprising: one or more computer instructions, wherein the one or more computer instructions are stored in a computer-readable storage medium, and a processor of a computer device is configured to read the one or more computer instructions from the computer-readable storage medium and execute the one or more computer instructions to cause the computer device to perform the communication method as defined in any one of claims 1 to 34 or any one of claims 35 to 68.

76. A computer program, comprising: one or more computer instructions, wherein the one or more computer instructions, when loaded and executed by a processor of a computer device, cause the computer device to perform the communication method as defined in any one of claims 1 to 34 or any one of claims 35 to 68.

FIG. 1

FIG. 2

FIG. 3

FIG. 4

Network device 110

Terminal device 210

Carrier 131

Antenna 316

Logic processing module 323

Energy harvesting module 321

Reflected signal 132

FIG. 5

Binary encoding

FIG. 6

NRZ
encoding

1  0  1  1  0  0  1  0  1  0  0  1  0  1  1

Manchester
encoding

1  0  1  1  0  0  1  0  1  0  0  1  0  1  1

URZ
encoding

1  0  1  1  0  0  1  0  1  0  0  1  0  1  1

DBP
encoding

1  0  1  1  0  0  1  0  1  0  0  1  0  1  1

Miller
Encoding

1  0  1  1  0  0  1  0  1  0  0  1  0  1  1

FIG. 7

| L-STF | L-LTF | L-SIG | BPSK-Mark1 | BPSK-Mark2 | WUR-Sync | WUR-Data |
|-------|-------|-------|------------|------------|----------|----------|

FIG. 8

910

Transmitting a first signal, wherein a time-domain resource of the first signal includes a first quantity of first time-domain units and a second quantity of second time-domain units, wherein the first time-domain units are used for synchronization at a second node

FIG. 9

1010

Transmitting a first signal, wherein a time-domain resource of the first signal includes a first quantity of first time-domain units and a second quantity of second time-domain units, wherein the first time-domain units are used for synchronization at a second node, wherein a second signal is associated with a third signal, wherein the second signal is a signal of the first signal which locates in one of the first time-domain units, and the third signal is a signal of the first signal which locates in one of the second time-domain units

FIG. 10

FIG. 11

First time-domain unit    Second time-domain unit

FIG. 12

Group of second time-domain units

First time-domain unit    Second time-domain unit

FIG. 13

Group of second time-domain units    Group of fourth time-domain units

First time-domain unit    Second time-domain unit    Third time-domain unit    Fourth time-domain unit

FIG. 14

FIG. 15

FIG. 16

FIG. 17

EP 4 753 343 A1

FIG. 18

First time-domain unit  Second time-domain unit  Third time-domain unit  Fourth time-domain unit

(a)
First sequence group

Second time-domain unit 1   Second time-domain unit 2   Second time-domain unit 3   Second time-domain unit 4   Second time-domain unit 5

1       1       0       1       0

(b)
First sequence group

Second time-domain unit 1   Second time-domain unit 2   Second time-domain unit 3   Second time-domain unit 5

1       1       0       0

First time-domain unit  Second time-domain unit  Third time-domain unit  Fourth time-domain unit

FIG. 19

2010

Receiving a first signal, wherein a time-domain resource of the first signal includes a first quantity of first time-domain units and a second quantity of second time-domain units, wherein the first time-domain units are used for synchronization at a second node

FIG. 20

2110

Receiving a first signal, wherein a time-domain resource of the first signal includes a first quantity of first time-domain units and a second quantity of second time-domain units, wherein the first time-domain units are used for synchronization at a second node, wherein a second signal is associated with a third signal, wherein second signal is a signal of the first signal which locates in one of the first time-domain units, and the third signal is a signal of the first signal which locates in one of the second time-domain units

FIG. 21

51

Envelope detection: time-domain
synchronization; correlation detection:
frequency-domain synchronization

Envelope detection: time-domain
synchronization

Correlation detection: frequency-
domain synchronization

First time-domain unit    Second time-domain unit

FIG. 22

Group of first time-domain units

Group of first time-domain units    First time-domain unit    Second time-domain unit

FIG. 23

Group of second
time-domain units

Group of first time-
domain units

First group of second
time-domain units

Second group of second
time-domain units

Group of first time-
domain units    First time-domain unit    Second time-domain unit

FIG. 24

One group of second
time-domain units

(a)

First group of first
time-domain units

Second group of first
time-domain units

First group of second
time-domain units

Second group of second
time-domain units

(b)

First group of first
time-domain units

Second group of first
time-domain units

First time-
domain unit

Second time-
domain unit

FIG. 25

Envelope detection: time-domain synchronization;
correlation detection: frequency-domain
synchronization

(a)

First group of first
time-domain units

Envelope detection: time-
domain synchronization

Correlation detection: frequency-
domain synchronization

(b)

First group of first time-
domain units

Second group of first time-
domain units

First time-
domain unit

Second time-
domain unit

FIG. 26

First signal

OOK-ON | OOK-OFF | OOK-OFF | OOK-ON | OOK-ON | OOK-OFF

⇧ Modulation

First sequence group

| First sequence element "1" | Second sequence element "0" | Second sequence element "0" | First sequence element "1" | First sequence element "1" | Second sequence element "0" |

⇧ Encoding

First information

| B0 "1" | B1 "0" | B2 "1" |

**FIG. 27**

First signal

OOK-ON | OOK-OFF | OOK-OFF | OOK-ON | OOK-OFF | OOK-ON | OOK-OFF | OOK-ON

⇧ Modulation

First sequence group

| First sequence element "1" | Second sequence element "0" | Second sequence element "0" | First sequence element "1" | Second sequence element "0" | First sequence element "1" | Second sequence element "0" | First sequence element "1" |

⇧ Encoding

First information

| B0 "1" | B1 "0" | B2 "0" | B3 "0" |

**FIG. 28**

OOK-ON | OOK-OFF | OOK-OFF | OOK-ON | OOK-ON | OOK-ON | OOK-OFF

First time-domain unit  Second time-domain unit  Third time-domain unit  Fourth time-domain unit

**FIG. 29**

FIG. 30

FIG. 31

FIG. 32

FIG. 33

| Sequence group A | 1 | 1 | 0 | 1 | 0 | 0 | 1 | 0 | 1 | 1 |

Replacement

| Sequence group B | 1 | 1 | 1 | 1 | 0 | 1 | 1 | 0 | 1 | 1 |

Modulation

First signal

| OOK-ON | OOK-ON | OOK-ON | OOK-ON | OOK-OFF | OOK-ON | OOK-ON | OOK-OFF | OOK-ON | OOK-ON |

FIG. 34

| Sequence group A | 1 | 1 | 0 | 1 | 0 | 0 | 1 | 0 | 1 | 1 |

Modulation

Signal A

| OOK-ON | OOK-ON | OOK-OFF | OOK-ON | OOK-OFF | OOK-OFF | OOK-ON | OOK-OFF | OOK-ON | OOK-ON |

Replacement

Signal B

| OOK-ON | OOK-ON | OOK-ON | OOK-ON | OOK-OFF | OOK-ON | OOK-ON | OOK-OFF | OOK-ON | OOK-ON |

FIG. 35

(a)

Measurement window of terminal 1

(b)

Measurement window of terminal 2

First time-domain unit    Second time-domain unit    Third time-domain unit    Fourth time-domain unit

FIG. 36

Network device | Terminal device

S3701 Reporting capability information

S3702 Transmitting a first signal

S3703 Performing synchronization based on the first signal

FIG. 37

Transmitting module — 3710

Processing module — 3750

Receiving module — 3730

FIG. 38

Receiving module — 3810

Processing module — 3850

Transmitting module — 3830

FIG. 39

Communication device 3900

FIG. 40

Communication device 4000

FIG. 41

# EP 4 753 343 A1

## INTERNATIONAL SEARCH REPORT

| | International application No. |
|---|---|
| | **PCT/CN2023/117986** |

### A. CLASSIFICATION OF SUBJECT MATTER

H04W 56/00(2009.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

DWPI, 3GPP, CNTXT, ENTXTC: 唤醒, 唤醒信号, 时隙, 时域, 同步, 序列, slot, sync, time, WUR, WUS, time domain, sequence, synchronization

### C. DOCUMENTS CONSIDERED TO BE RELEVANT

| Category* | Citation of document, with indication, where appropriate, of the relevant passages | Relevant to claim No. |
|---|---|---|
| X | CN 115942439 A (HUAWEI TECHNOLOGIES CO., LTD.) 07 April 2023 (2023-04-07) description, paragraphs 0062-0105 and 0110-0205 | 1-5, 10-12, 14-29, 31-39, 44-46, 48-63, 65-76 |
| A | CN 115942439 A (HUAWEI TECHNOLOGIES CO., LTD.) 07 April 2023 (2023-04-07) description, paragraphs 0062-0105 and 0110-0205 | 6-9, 13, 30, 40-43, 47, 64 |
| A | CN 115884330 A (HUAWEI TECHNOLOGIES CO., LTD.) 31 March 2023 (2023-03-31) entire document | 1-76 |
| A | US 2019159128 A1 (SAMSUNG ELECTRONICS CO., LTD.) 23 May 2019 (2019-05-23) entire document | 1-76 |
| A | WO 2023051321 A1 (HUAWEI TECHNOLOGIES CO., LTD.) 06 April 2023 (2023-04-06) entire document | 1-76 |
| A | ERICSSON. "Low Power WUS Evaluations" *3GPP TSG-RAN WG1 Meeting #112, R1-2301558*, 03 March 2023 (2023-03-03), entire document | 1-76 |

☐ Further documents are listed in the continuation of Box C.   ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **30 April 2024** | **22 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/117986**

| Patent document cited in search report | | | Publication date (day/month/year) | Patent family member(s) | | | Publication date (day/month/year) |
|---|---|---|---|---|---|---|---|
| CN | 115942439 | A | 07 April 2023 | WO | 2023051124 | A1 | 06 April 2023 |
| CN | 115884330 | A | 31 March 2023 | WO | 2023051321 | A1 | 06 April 2023 |
| US | 2019159128 | A1 | 23 May 2019 | WO | 2019098801 | A1 | 23 May 2019 |
| | | | | EP | 3698508 | A1 | 26 August 2020 |
| | | | | KR | 20200075782 | A | 26 June 2020 |
| | | | | CN | 111630801 | A | 04 September 2020 |
| WO | 2023051321 | A1 | 06 April 2023 | CN | 115884330 | A | 31 March 2023 |

Form PCT/ISA/210 (patent family annex) (July 2022)